Europäisches Patentamt

European Patent Office

Office européen des brevets

(11) Numéro de publication : **0 449 748 A1**

# (12) DEMANDE DE BREVET EUROPEEN

(21) Numéro de dépôt : **91420066.2**

(22) Date de dépôt : **26.02.91**

(51) Int. Cl.$^5$ : **A01N 25/10, C08K 5/00, C08L 83/04**

(30) Priorité : 27.02.90 FR 9002695

(43) Date de publication de la demande :
02.10.91 Bulletin 91/40

(84) Etats contractants désignés :
AT BE CH DE DK ES FR GB GR IT LI LU NL SE

(71) Demandeur : RHONE-POULENC AGROCHIMIE
14-20, rue Pierre Baizet
F-69009 Lyon (FR)

(72) Inventeur : Porte, Hugues
6 Chemin de Crépieux
F-69300 Caluire (FR)
Inventeur : Torres, Chislaine
104 Rue Ney
F-69006 Lyon (FR)

(74) Mandataire : Chrétien, François et al
RHONE-POULENC AGROCHIMIE- DPI B.P.
9163
F-69263 Lyon Cédex 09 (FR)

(54) Compositions solides silicones à action biologique agricoles.

(57) Compositions solides à action biologique agricole. Elles comprennent une matrice en élastomère silicone dans laquelle est répartie une matière active à action biologique agricole hydrosoluble et un agent auxiliaire hydrosoluble.
Application en agriculture.

EP 0 449 748 A1

## COMPOSITIONS SOLIDES SILICONES A ACTION BIOLOGIQUE AGRICOLES

La présente invention concerne des compositions solides à base de silicone à action biologique agricole, leur préparation et leur utilisation pour le traitement des plantes.

Le traitement des plantes et notamment des cultures pour favoriser leur croissance nécessite souvent la possibilité de relarguer les matières à action biologique progressivement sur ou vers les plantes à partir d'un support solide.

De nombreuses techniques ont été proposées associant une matière polymère et certaines matières actives notamment agrochimiques ou engrais. En fait ces techniques ont trouvé des applications pratiques limitées ou n'ont pas trouvé de débouché suffisant en raison de plusieurs inconvénients dont le principal est la difficulté de régler la cinétique de libération de la matière active et par conséquent d'obtenir à coup sûr un effet déterminé pour une teneur en matière active donnée.

D'autres inconvénients résident également dans l'inocuité insuffisante des polymères pour les plantes à traiter et l'environnement, ainsi que leur coût et leur mise en oeuvre.

La présente invention a pour but de pallier ces inconvénients et de fournir des compositions à action biologique progressive permettant la libération de matières actives agricoles de manière contrôlée à faible coût, et sans inconvénient pour les plantes à traiter et l'environnement.

Plus précisément l'invention concerne des compositions solides à base de polymère à action biologique agricole pour favoriser la croissance des plantes, caractérisées en ce qu'elles sont constituées d'une quantité majoritaire d'une matière silicone réticulée ou non, perméable à la vapeur d'eau et d'une quantité minoritaire d'une matière active à action biologique agricole et de solubilité dans l'eau d'au moins 0,5 g/l, et un agent auxiliaire hydrosoluble, dispersés de façon homogène dans la matière silicone, et sans effet d'inhibition sur la réticulation du silicone, la matière silicone, la forme hydrosoluble de la matière active et l'agent auxiliaire étant tels que la cinétique de libération de la matière active par la matrice silicone est d'ordre zéro.

L'invention concerne plus particulièrement des compositions du type ci-dessus caractérisées en ce que la matière active et l'agent auxiliaire sont présents à raison de 5 à 50, de préférence de 15 à 40, parties en poids pour 100 parties en poids d'organopolysiloxane de départ.

D'une manière générale, le rapport en volume de la matière active à l'agent auxiliaire peut varier de 1/10 à 10/1 de préférence de 1/5 à 5/1.

Comme silicones utilisables comme matières dans les compositions selon l'invention, on peut citer plusieurs groupes.

Un premier groupe comprend des compositions de silicone comportant (A) une gomme diorganopolysiloxane, (B) une charge renforçante ($B_1$), de préférence siliceuse, et/ou un peroxyde organique ($B_2$).

Des compositions préférées comportent :

– (A) : 100 parties en poids d'une gomme diorganopoly-siloxane ayant une viscosité supérieure à 1 million mPa.s à 25°C,

– (B) : 5 à 130 parties en poids d'une charge siliceuse renforçante ($B_1$) choisie parmi les silices de pyrogénation et les silices de précipitation.

De manière avantageuse la gomme (A) a pour formule générale $R_{3-a}(R'O)_aSiO(R_2SiO)_nSi(OR')_aR_{3-a}$ dans laquelle les symboles R, identiques ou différents, représentent des radicaux hydrocarbonés en $C_1$-$C_8$, substitués ou non par des atomes d'halogène, des radicaux cyano ; le symbole R' représente un atome d'hydrogène, un radical alkyle en $C_1$-$C_4$, le symbole a représente zéro ou un, le symbole n représente un nombre ayant une valeur suffisante pour obtenir une viscosité d'au moins 1 Million de mPa.s à 25°C, au moins 50 % en nombre de radicaux représentés par R sont des radicaux méthyle.

De préférence 0,005 à 0,5 mole % des motifs $R_2SiO$ entrant dans la constitution de la gomme (A) sont choisis parmi ceux de formules $(CH_2=CH)(R)SiO$ et $(CH_2=CH)R_{2-a}(RO')_aSi_{0,5}$.

La gomme (A) de viscosité d'au moins 1 Million de mPa.s à 25°C, de préférence d'au moins 2 Millions de mPa.s à 25°C, est constituée, le long de sa chaîne, de motifs $R_2SiO$ et elle est bloquée à chaque extrémité de sa chaîne par un motif $R_{3-a}R(O)_aSiO_{0,5}$ ; cependant la présence, en mélange avec ces motifs, de motifs de structure différente, par exemple de formule $RSiO_{1,5}$ et $SiO_2$, n'est pas exclue dans la proportion d'au plus 2 % par rapport au nombre total des motifs $R_2SiO$ et $R_{3-a}(RO')_aSiO_{0,5}$.

Le symbole R représente un radical hydrocarboné en $C_1$-$C_8$ substitué ou non par des atomes d'halogène, des radicaux cyano ; il englobe plus spécifiquement :

– des radicaux alkyle en $C_1$-$C_5$, substitué ou non par des atomes d'halogène, des radicaux cyano, tels que les radicaux méthyle, éthyle, propyle, isopropyle, butyle, isobutyle, pentyle, trifluoro-3,3,3 propyle, beta-cyanoéthyle, gamma-cyanopropyle,

– des radicaux alcényles en $C_2$-$C_4$ tels que les radicaux vinyle, allyle, butène-2 yle,

– des radicaux aryle mononucléaire en $C_6$-$C_8$, substitués ou non par des atomes d'halogène, tels que les radicaux phényle, chlorophényle, tolyle, trifluorométhylphényle.

Les radicaux alkyle en $C_1$-$C_4$, représentés par le symbole R', concernent plus spécifiquement les radicaux méthyle, éthyle, propyle, isopropyle, butyle, butyle secondaire.

Au moins 50 % en nombre, de préférence au moins 70%, des radicaux représentés par R sont des radicaux méthyle.

Par ailleurs des radicaux vinyle sont de préférence également présents, en quantité appropriée, dans la gomme (A) ; ils conduisent à des motifs de formule $CH_2=CH(R)SiO$ et $CH_2 = CH(R_{2-a})(RO')_aSiO_{0,5}$ dont le nombre a représente 0,005 à 0,5 mole %, de préférence 0,01 à 0,45 mole %, de l'ensemble des motifs de formules générales $R_2SiO$ et $R_{3-a}(RO')_aSiO_{0,5}$, entrant dans la constitution de la gomme (A).

A titre d'exemples concrets de motifs constituant les gommes (A) peuvent être cités ceux de formules :

$(CH_3)_2SiO$, $CH_3(CH_2=CH)SiO$, $CH_3(C_6H_5)SiO$, $(C_6H_5)_2SiO$, $CH_3(C_2H_5)SiO$, $CH_3CH_2$-$CH_2(CH_3)SiO$, $CH_3(n.C_3H_7)SiO$, $(CH_3)_3SiO_{0,5}$, $(CH_3)_2CH_2=CHSiO_{0,5}$, $CH_3(C_6H_5)_2SiO_{0,5}$, $CH_3(C_6H_5)(CH_2=CH)SiO_{0,5}$, $HO(CH_3)_2SiO_{0,5}$, $CH_3O(CH_3)_2SiO_{0,5}$, $C_2H_5O(CH_3)_2SiO_{0,5}$, $n.C_3H_7O(CH_3)_2SiO_{0,5}$, $HO(CH_2=CH)(CH_3)SiO_{0,5}$.

Les gommes (A) sont commercialisées par les fabricants de silicones, d'autre part elles peuvent être aisément fabriquées en mettant en oeuvre des techniques abondamment décrites dans la littérature chimique.

Dans la majorité des cas, on utilise des gommes méthylvinyldiméthylpolysiloxanes possédant le long de leur chaîne des motifs $(CH_3)_2SiO$ et $CH_2=CH(CH_3)SiO$ et, à l'extrémité de leur chaîne, des motifs choisis parmi ceux de formules :

$(CH_3)_2(CH_2=CH)SiO_{0,5}$, $HO(CH_3)(CH_2=CH)SiO_{0,5}$, $(CH_3)_3SiO_{0,5}$, $C_6H_5(CH_3)(CH_2=CH)SiO_{0,5}$, $HO(CH_3)_2SiO_{0,5}$,

ou des gommes diméthylpolysiloxanes bloquées à chaque extrémité de leur chaîne par l'un des motifs précédents renfermant un radical vinyle.

Elles présentent généralement une viscosité d'au moins 2 Millions de mPa.s à 25°C.

Les charges $(B_1)$ qui sont de préférence des silices renforçantes sont utilisées à raison de 5 à 130 parties des gommes diorganopolysiloxanes (A). Elles sont choisies parmi les silices de combustion et les silices de précipitation.

Elles ont une surface spécifique, mesurée selon les méthodes BET, d'au moins 50 m²/g, de préférence supérieure à 70 m²/g, une dimension moyenne des particules primaires inférieures à 0,1, μm (micromètre) et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane.

Lors de ce traitement, les silices peuvent accroître leur poids de départ jusqu'à un taux de 20 %, de préférence 18 % environ.

Les compositions selon l'invention,c'est à dire les compositions silicones du premier groupe (soit A + B) mélangées à la matière active C peuvent être malaxées à froid telles quelles et être extrudées sous les formes les plus variées. Les formes de composition de silicone obtenues peuvent être découpées à la longueur désirée de manière à ce que la forme coupée comporte une quantité suffisante en équivalent de matière active pour un relargage pendant la durée souhaitée.

De façon surprenante on a découvert que ces compositions de silicone non réticulées ont des caractéristiques physiques suffisantes pour les applications envisagées et relarguent la matière active de façon continue et contrôlée.

Dans le cadre de la présente invention, on peut utiliser en plus de $(B_1)$ ou à la place de $(B_1)$ un peroxyde organique $(B_2)$. Il est alors nécessaire de réticuler à chaud la composition élastomère.

Les peroxydes organiques $(B_2)$ sont utilisés à raison de 0,1 à 6 parties, de préférence 0,2 à 5 parties, pour 100 parties des gommes (A). Ils sont bien connus des techniciens et comprennent plus spécialement le péroxyde de benzoyle, le peroxyde de dichloro-2,4 benzoyle, le peroxyde de dicumyle, le bis(t-butylperoxy)2,5 diméthyl-2,5 hexane, le perbenzoate de t-butyle, le carbonate de peroxy t-butyle et d'isopropyle, le peroxyde de di-t-butyle, le bis(t-butylperoxy)-1,1 triméthyl-3,3,5 cyclohexane.

Ces divers peroxydes se décomposent à des températures et à des vitesses parfois différentes. Ils sont choisis en fonction des conditions de durcissement exigées.

Les compositions de silicone selon l'invention peuvent comporter en outre, pour 100 parties de gomme (A) de 0,1 à 6 parties d'un agent de texturation (D) qui est un polymère organofluoré sous forme d'un solide pulvérulent.

Les polymères fluorés (D) sont utilisés à raison de 0,1 à 6 parties, de préférence 0,15 à 5 parties, pour 100 parties des gommes diorganopolysiloxanes (A). Ces composés sont bien connus des techniciens ; ils sont préparés par polymérisation ou copolymérisation de monomères choisis par exemple dans le groupe du tétrafluoroéthylène, du chlorotrifluoroéthylène, du fluorure de vinylidène, de l'hexafluoropropène.

Ce sont donc des polymères ou des copolymères constitués de motifs dérivés des monomères pré-cédents ; ainsi sont utilisables des polytétrafluoroéthylènes, les copolymères binaires du type polytétrafluoroéthylène-beta-fluoropropène, ou du type fluorure de vinylidène-hexafluoropropène, les copolymères ternaires du type fluorure de vinylidène-hexafluoropropène-tétrafluoroéthylène.

Ces composés peuvent être introduits dans les compositions de l'invention sous la forme de poudres de diamètre particulaire moyen inférieur à 100 micromètres, par exemple de diamètre allant de 25 à 65 micromètres.

De préférence, quand on utilise les agents de réticulation (B$_2$), on peut remplacer jusqu'à 90 % en poids des silices de renforcement (B$_1$) par des charges semi-renforçantes ou de bourrage, dont le diamètre particulaire est supérieur à 0,1 um, telles que le quartz broyé, les argiles calcinées et les terres de diatomées.

Les compositions de silicones peuvent comporter en outre de 1 à 10 parties d'huile diméthylpolysiloxanes (E) à extrémités silanol de viscosité à 25°C comprise entre 10 et 5 000 mPa.s, de préférence de 30 à 1000 mPa.s, pour 100 parties de gomme (A). Leur utilisation est surtout recommandée lorsque les quantités de char-ges renforçantes (B$_1$) sont élevées.

La préparation des compositions conformes à l'invention s'effectue à l'aide de moyens mécaniques connus, par exemples de pétrins, de mélangeurs à cylindres, de mélangeurs à vis.

Les divers constituants sont incorporés dans ces appareils dans un ordre pouvant être quelconque. Il est toutefois recommandé de charger la gomme (A), puis dans l'ordre les charges siliceuses (B$_1$) et la matière active (C), éventuellement l'additif (E) et, en dernier lieu, le composé (D) et (B$_2$).

Les compositions obtenues sont stables au stockage ; par ailleurs, elles se moulent et s'extrudent aisément ce qui permet de réaliser des formes très variées. Celles qui contiennent du péroxyde (B$_2$) sont réticulées par chauffage. La durée du chauffage varie évidemment avec la température, la pression et la nature des réticulants. Elle est généralement de l'ordre de plusieurs minutes vers 150-250°C et de quelques secondes vers 250-350°C.

Les élastomères ainsi formés peuvent être éventuellement post-chauffés ultérieurement, surtout ceux obtenus par moulage pendant une période d'au moins une heure à une température comprise entre 190 et 270°C dans le but d'achever leur réticulation.

Néanmoins, ces élastomères possèdent dès la fin de leur première phase de réticulation, c'est à dire avant la phase éventuelle de post-chauffage, des caractéristiques physiques suffisantes pour l'application envisagée.

Les compositions de silicones éventuellement réticulées se présentent avantageusement sous formes solides variées. Pour une présentation donnée, on détermine la quantité de matière active et la durée de relargage.

Un second groupe de silicones utilisables selon l'invention comprend des compositions de silicone vulcanisables de préférence à chaud comportant :

(A) une gomme diorganopolysiloxane présentant, par molécule au moins deux groupes vinyle liés au silicium et une viscosité à 25°C d'au moins 500 000 mPa.s,

(B) au moins un organohydrogénopolysiloxane présentant par molécule au moins trois atomes d'hydrogène liés au silicium,

(C) une charge renforçante, et

(D) une quantité catalytiquement efficace d'un catalyseur qui est un composé d'un métal du groupe du platine.

Plus précisemment la présente invention concerne une composition de silicone comportant :

– (A) : 100 parties d'une gomme diorganopolysiloxane présentant par molécule au moins deux groupes vinyle liés au silicium et une viscosité à 25°C d'au moins 500 000 mPa.s,

– (B) : au moins un organohydrogénopolysiloxane présentant par molécule au moins 3 atomes d'hydrogène, liés au silicium, en quantité telle que le rapport en nombre des fonctions hydrure de (B) sur les groupes vinyle de (A) soit compris entre 0,4 et 10,

– (C) : 5 à 130 parties d'une charge renforçante de préférence siliceuse choisie parmi les silices de pyrogénation et les silices de précipitation, et

– (D) : une quantité catalytiquement efficace d'un catalyseur qui est un composé d'un métal du groupe du platine.

Le rapport en nombre des fonctions hydrures de (B) sur les fonctions vinyle de (A) peut être très variable. Il est généralement compris entre 0,4 et 10, de préférence entre 1,1 et 4.

Plus particulièrement la gomme diorganopolysiloxane (A) a pour formule générale $R_{3-a}(R'O)_aSiO(R_2SiO)_nSi(OR')_aR_{3-a}$ dans laquelle les symboles R, identiques ou différents, représentent des radi-

caux hydrocarbonés en $C_1$-$C_8$, substitués ou non par des atomes d'halogène, des radicaux cyano ; le symbole R' représente un atome d'hydrogène, un radical alkyle en $C_1$-$C_4$, le symbole a représente zéro ou un, le symbole n représente un nombre ayant une valeur suffisante pour obtenir une viscosité d'au moins 500 000 mPa.s à 25°C, au moins 50 % en nombre de radicaux représentés par R sont des radicaux méthyle.

De préférence 0,005 à 0,5 mole % des motifs entrant dans la constitution de la gomme (A) sont choisis parmi ceux de formules $(CH_2=CH)(R)SiO$ et/ou $(CH_2=CH)R_{2-a}(RO')_aSiO_{0,5}$.

La gomme (A) de viscosité d'au moins 500 000 mPa.s à 25°C, de préférence d'au moins 1 Million de mPa.s à 25°C, est constituée, le long de sa chaîne, de motifs $R_2SiO$ et elle est bloquée à chaque extrémité de sa chaîne par un motif $R_{3-a}R(O)_aSiO_{0,5}$ ; cependant la présence en mélange avec ces motifs, de motifs de structure différente, par exemple de formule $RSiO_{1,5}$ et $SiO_2$, n'est pas exclue dans la proportion d'au plus 2 % par rapport au nombre total des motifs $R_2SiO$ et $R_{3-a}(RO')_aSiO_{0,5}$.

Le symbole R représente un radical hydrocarboné en $C_1$-$C_8$ substitué ou non par des atomes d'halogène, des radicaux cyano ; il englobe plus spécifiquement :

– des radicaux alkyle en $C_1$-$C_5$, substitués ou non par des atomes d'halogène, des radicaux cyano, tels que les radicaux méthyle, éthyle, propyle, isopropyle, butyle, isobutyle, pentyle, trifluoro-3,3,3 propyle, beta-cyanoéthyle,gamma-cyanopropyle,

– des radicaux alcenyle en $C_2$-$C_4$ tels que les radicaux vinyle, allyle, butène-2 yle,

– des radicaux aryle mononucléaire en $C_6$-$C_8$, substitués ou non par des atomes d'halogènes tels que les radicaux phényle, chlorophényle, tolyle, trifluorométhylphényle.

Les radicaux alkyle en $C_1$-$C_4$, représentés par le symbole R', concernent plus spécifiquement les radicaux méthyle, éthyle, propyle, isopropyle, butyle, butyle secondaire.

Au moins 50 % en nombre, de préférence au moins 70 % des radicaux R sont des radicaux méthyle.

Par ailleurs des radicaux vinyle sont de préférence également présents, en quantité appropriée, dans la gomme (A) ; ils conduisent à des motifs de formule $CH_2=CH(R)SiO$ et $CH_2=CH(R_{2-a})(RO')_aSiO_{0,5}$ dont le nombre représente 0,005 à 0,5 mole %, de préférence 0,01 à 0,45 mole %, de l'ensemble des motifs de formules générales $R_2SiO$ et $R_{3-a}(RO')_aSiO_{0,5}$, entrant dans la constitution de la gomme (A).

A titre d'exemples concrets de motifs constituant les gommes (A) peuvent être cités ceux de formules :

$(CH_3)_2SiO$, $CH_3(CH_2=CH)SiO$, $CH_3(C_6H_5)SiO$, $(C_6H_5)_2SiO$, $CH_3(C_2H_5)SiO$, $CH_3CH_2\text{-}CH_2(CH_3)SiO$, $CH_3(n.C_3H_7)SiO$, $(CH_3)_3SiO_{0,5}$, $(CH_3)_2(CH_2=CH)SiO_{0,5}$,

$CH_3(C_6H_5)_2SiO_{0,5}$, $CH_3(C_6H_5)(CH_2=CH)SiO_{0,5}$, $HO(CH_3)_2SiO_{0,5}$,

$CH_3O(CH_3)_2SiO_{0,5}$, $C_2H_5O(CH_3)_2SiO_{0,5}$, $n.C_3H_7O(CH_3)_2SiO_{0,5}$, $HO(CH_2=CH)(CH_3)SiO_{0,5}$.

Les gommes (A) sont commercialisées par les fabricants de silicones, d'autre part elles peuvent être aisément fabriquées en mettant en oeuvre des techniques abondamment décrites dans la littérature chimique.

Dans la majorité des cas, on utilise des gommes méthylvinyldiméthylpolysiloxanes possèdant le long de leur chaîne des motifs $(CH_3)_2SiO$ et $CH_2=CH(CH_3)SiO$ et à l'extrémité de leur chaîne des motifs choisis parmi ceux de formules :

$(CH_3)_2(CH_2=CH)SiO_{0,5}$, $HO(CH_3)(CH_2=CH)SiO_{0,5}$, $(CH_3)_3SiO_{0,5}$, $C_6H_5(CH_3)(CH_2=CH)SiO_{0,5}$, $HO(CH_3)_2SiO_{0,5}$,

ou des gommes diméthylpolysiloxanes bloquées à chaque extrémité de leur chaîne par l'un des motifs précédents renfermant un radical vinyle.

Elles présentent généralement une viscosité d'au moins 2 Millions de mPa.s à 25°C.

L'organohydrogénopolysiloxane (B) présente un motif siloxane de formule générale moyenne :

$$\frac{(H)_c \ (R'')_d \, SiO_{4-d-c}}{2}$$

dans laquelle R'' représente des radicaux méthyle, phényle et vinyle, 50 % au moins de ces radicaux étant des radicaux méthyle, c représente un nombre quelconque de 0,01 à 1 inclus et d représente un nombre quelconque de 0,01 à 2 inclus.

Ces organohydrogénopolysiloxanes (B) sont choisis parmi les polymères linéaires, ramifiés ou cycliques, constitués de motifs choisis parmi ceux de formules :

$R''_2SiO$, $H(R'')SiO$, $H(R'')_2SiO_{0,5}$, $HSiO_{1,5}$, $R''SiO_{1,5}$ $SiO_2$, $R''SiO_{0,5}$.

Ils peuvent être liquides, gommeux ou résineux. Ils renferment au moins 3 SiH par molécule.

Des exemples concrets de produits (B) abondamment cités dans la littérature sont décrits en détail dans les brevets américains US-A-3 220 972, US-A-3 284 406, US-A-3 436 366, et US-A-3 697 473 cités comme références.

Les charges (C) qui sont de préférence des silices renforçantes sont utilisées à raison de 5 à 130 parties des gommes diorganopolysiloxanes (A). Elles sont choisies parmi les silices de combustion et les silices de précipitation. Elles ont une surface spécifique, mesurée selon les méthodes BET, d'au moins 50 m²/g, de préférence supérieure à 70 m²/g, une dimension moyenne des particules primaires inférieures à 0,1, μm (micromètre) et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane.

Lors de ce traitement, les silices peuvent accroître leur poids de départ jusqu'à un taux de 20 %, de préférence 18 % environ.

Il est souhaitable d'ajouter une quantité catalytiquement efficace d'un catalyseur (D) d'hydrosilylation qui est un composé du groupe du platine, de préférence le platine à la dose de 0,001 à 1 %, de préférence de 0,05 à 0,5 % calculés en poids de métal catalytique par rapport au poids de la gomme (A) et de l'organohydrogénopolysiloxane (B).

Tous les composés du platine abondamment décrits dans la littérature comme catalyseurs d'hydrosilylation sont utilisables, en particulier l'acide chloroplatinique $H_2PtCl_6$, les produits de réaction de l'acide chloroplatinique avec des alcools, des éthers ou des aldéhydes (brevet américain US-A-3 220 972) et les produits de réaction de l'acide chloroplatinique avec des vinylpolysiloxanes, traités ou non par un agent alcalin pour éliminer au moins partiellement les atomes de chlore (brevets américains US-A-3 419 593, US-A-3 775 452 et US-A-3 814 730).

On peut remplacer jusqu'à 90 % en poids des silices de renforcement (C) par des charges semi-renforçantes ou de bourrage, dont le diamètre particulaire est supérieur à 0,1 μm (micromètre), telles que le quartz broyé, les argiles calcinées et les terres de diatomées.

Les compositions de silicones peuvent comporter en outre de 1 à 10 parties d'huiles diméthylpolysiloxanes (F) à extrémités silanol de viscosité à 25°C comprise entre 10 et 5 000 mPa.s, de préférence de 30 à 1000 mPa.s, pour 100 parties de gomme (A). Leur utilisation est surtout recommandée lorsque les quantités de charges renforçantes (C) sont élevées.

La préparation des compositions conformes à l'invention s'effectue à l'aide de moyens mécaniques connus, par exemples de pétrins, de mélangeurs à cylindres, de mélangeurs à vis.

Les divers constituants sont incorporés dans ces appareils dans un ordre pouvant être quelconque. Il est toutefois recommandé de charger la gomme (A), puis dans l'ordre les charges siliceuses (C) et la matière active (E), éventuellement l'additif (F) et, en dernier lieu, le composé (D). Si la composition doit être stockée avant son extrusion et/ou moulage, il est souhaitable d'ajouter une quantité efficace d'un inhibiteur de l'action catalytique du platine qui disparait à chaud lors de la vulcanisation de la composition. On peut ainsi utiliser comme inhibiteur, en particulier les amines organiques, les silazanes, les oximes organiques, les diesters de diacides carboxyliques, les cétones acétgléniques, les vinylméthylcyclopolysiloxanes (voir notamment US-A-3 445 420 et US-A-3 989 667).

L'inhibiteur est utilisé à raison de 0,005 à 5 parties, de préférence 0,01 à 3 parties pour 100 parties de constituant (A).

Les compositions obtenues se moulent et s'extrudent aisément ce qui permet de réaliser des formes très variées. Elles sont en outre durcissables en élastomères par chauffage sous pression ou à l'air ambiant à des températures de l'ordre de 100 à 350°C.

La durée du chauffage varie évidemment avec la température, la pression et la nature des réticulants. Elle est généralement de l'ordre de plusieurs minutes vers 150-250°C et de quelques secondes vers 250-350°C.

Les élastomères ainsi formés peuvent être éventuellement post-chauffés ultérieurement, surtout ceux obtenus par moulage pendant une période d'au moins une heure à une température comprise entre 190 et 270°C dans le but d'achever leur réticulation.

Néanmoins, ces élastomères possèdent dès la fin de leur première phase de réticulation, c'est à dire avant la phase éventuelle de post-chauffage, des caractéristiques physiques suffisantes pour l'application envisagée.

Ainsi les compositions selon l'invention peuvent être malaxées à froid telles quelles et être extrudées et/ou moulées puis vulcanisées sous les formes les plus variées.

Un troisième groupe de silicones utilisables selon l'invention comprend des compositions diorganopolysiloxanes durcissables en un élastomère de silicone par des réactions de polycondensation comportant :

– (A) : au moins une huile diorganopolysiloxane portant à chaque extrémité de la chaîne au moins deux groupes condensables ou hydrolysables, ou un seul groupe hydroxy,

6

– (B) : un catalyseur de polycondensation de l'huile,

– (C) : un silane comportant au moins trois groupes condensables ou hydrolysables, quand (A) est une huile à extrémités hydroxy.

Dans ce qui suit ou ce qui précède, sauf mentions contraires, les pourcentages et parties sont en poids.

Les huiles diorganopolysiloxanes (A) utilisables dans les compositions selon l'invention sont plus particulièrement celles répondant à la formule (1) :

$$Y_n Si_{3-n} O(SiR_2 O)_x SiR_{3-n} Y_n \qquad (1)$$

dans laquelle :

R représente des radicaux hydrocarbonés monovalents identiques ou différents, Y représente des groupes hydrolysables ou condensables identiques ou différents, ou des groupes hydroxy,

n est choisi parmi 1, 2 et 3 avec n = 1, quand Y est un hydroxy, et x est un nombre entier supérieur à 1, de préférence supérieur à 10.

La viscosité des huiles de formule (1) est comprise entre 50 et $10^6$ mPa.s à 25°C. Comme exemple de radicaux R on peut citer les radicaux alkyle ayant de 1 à 8 atomes de carbone tels que méthyle, éthyle, propyle, butyle, hexyle et octyle, les radicaux vinyle, les radicaux phényle.

Comme exemples de radicaux R substitués on peut citer les radicaux trifluoro-3,3,3 propyle, chlorophényle et betacyanoéthyle.

Dans les produits de formule (1) généralement utilisés industriellement, au moins 60 % en nombre des radicaux R sont des radicaux méthyle, les autres radicaux étant généralement des radicaux phényle et/ou vinyle.

Comme exemple de groupe Y hydrolysables on peut citer les groupes amino, acylamino, aminoxy, cétiminoxy, iminoxy, énoxy, alcoxy, alcoxy-alkylène-oxy, acyloxy et phosphato.

Comme exemples de groupes Y amino, on peut citer les groupes n-butylamino, sec-butylamino et cyclohexylamino, des groupes acylamino N substitué, on peut citer le groupe benzoyl-amino, de groupes aminoxy les groupes diméthylaminoxy, diéthylaminoxy, dioctylaminoxy et diphénylaminoxy, comme exemples de groupes Y iminoxy et cétiminoxy, ceux dérivés de l'acétophénone-oxime, l'acétone-oxime, la benzophénone-oxime, la méthyl-éthyl cétoxime, la diisopropylcétoxime et la chlorocyclohexanone-oxime.

Comme groupes Y alcoxy on peut citer les groupes ayant de 1 à 8 atomes de carbone comme les groupes méthoxy, propoxy, isopropoxy, butoxy, hexyloxy et octyloxy, comme groupe Y alcoxy-alkylène-oxy on peut citer le groupe méthoxy-éthylène-oxy.

Comme groupes Y acyloxy, on peut citer les groupes ayant de 1 à 8 atomes de carbone comme les groupes formyloxy, acétoxy, propionyloxy et éthyl-2 hexanoyloxy.

Comme groupe Y phosphato, on peut citer ceux dérivant des groupes phosphate de diméthyle, phosphate de diéthyle et phosphate de dibutyle.

Comme groupe Y condensables, on peut citer les atomes d'hydrogène et les atomes d'halogène, de préférence le chlore.

Quand dans la formule (1) ci-dessus les groupes Y sont des groupes hydroxy, n est alors égal à 1, il est nécessaire, pour préparer des élastomères polyorganosiloxanes à partir des polymères de formule (1) ci-dessus, d'utiliser, en plus des catalyseurs de condensation, des agents réticulants (D) déjà indiqués qui sont des silanes de formule générale :

$$R_{4-a} Si Y'_a \qquad (2)$$

dans laquelle :

R a les significations données plus haut à la formule (1) et Y' représente des groupes hydrolysables ou condensables, identiques ou différents, a est égal à 3 ou 4.

Les exemples donnés pour les groupes Y sont appliquables aux groupes Y'.

Il est souhaitable d'utiliser des silanes de formule (2) même dans le cas où l'huile (A) Y n'est pas un groupe hydroxy.

Dans ce cas il est souhaitable d'utiliser des groupes Y de l'huile (A) identiques aux Y' du silane (D).

Les diorganopolysiloxanes alpha-oméga dihydroxylés de formule (1) sont généralement des huiles dont la viscosité varie de 500 mPa.s à 25°C à 500 000 mPa.s à 25°C, de préférence 800 mPa.s à 400 000 à 25°C, ce sont des polymères linéaires constitués essentiellement de motifs diorganosiloxyles de formule ($R_2SiO$).

Toutefois la présence d'autres motifs, présents généralement à titre d'impuretés, tels que $R SiO_{3/2}$, $R SiO_{1/2}$ et $SiO_{4/2}$ n'est pas exclue dans la proportion d'au plus 1 % par rapport au nombre de motifs diorganosiloxyles.

Les radicaux organiques, liés aux atomes de silicium des huiles de base, représentés par le symbole R, peuvent être choisis parmi les radicaux alkyles ayant de 1 à 3 atomes de carbone tels que les radicaux méthyle, éthyle, n-propyle, le radical vinyle, le radical phényle, le radical trifluoro-3,3,3 propyle et le radical betacyanoéthyle.

Au moins 60 % de l'ensemble des radicaux R sont des radicaux méthyle, au plus 1 % sont des radicaux vinyle.

A titre illustratif de motifs représentés par la forume $R_2SiO$ peuvent être cités ceux de formules :

$(CH_3)_2SiO$ ; $CH_3(CH_2=CH)SiO$ ; $CH_3(C_6H_5)SiO$ ; $CF_3CH_2CH_2(CH_3)SiO$ ; $NC-CH_2CH_2(CH_3)SiO$ ; $NC-CH_2(C_6H_5)SiO$ ;

Ces huiles de base sont, dans leur grande majorité, commercialisées par les fabricants de silicones. D'autre part leurs techniques de fabrication sont bien connues, on les trouve décrites par exemple dans les brevets français FR-A-1 134 005, FR-A-1 198 749, FR-A-1 226 745.

Comme exemples de silanes monomères (D) de formule (2) on peut citer plus particulièrement les polyacyloxysilanes, les polyalcoxysilanes, les polycétiminoxysilanes et les polyiminoxysilanes et en particulier les silanes suivants :

$CH_3Si(OCOCH_3)_3$ ; $C_2H_5Si(OCOCH_3)_3$ ;

$(CH_2 = CH)Si(OCOCH_3)_3$ ; $C_6H_5Si(OCOCH_3)_3$ ; $CF_3CH_2CH_2Si(OCOCH_3)_3$;$NC-CH_2CH_2Si(OCOCH_3)_3$ ; $CH_2ClSi(OCOCH_2CH_3)_3$ ;

$CH_3Si(ON=C(CH_3)C_2H_5)_2OCH_2CH_2OCH_3$ ;

$CH_3Si(ON=CH-CH_3)_2OCH_2CH_2OCH_3$.

Les silanes (D) ci-dessus associés à des polydiorganosiloxanes alpha-oméga dihydroxylés de formule (1) peuvent être utilisés en compositions monocomposantes stables à l'abri de l'air.

Comme exemples de silane monomère de formule (2) qui, associés à des polydiorganosiloxanes alpha-oméga dihydroxylés de formule (1), peuvent être utilisés avantageusement en compositions bi-composantes, on peut citer les polyalcoxysilanes et en particulier ceux de formules :

$Si(OC_2H_5)_4$;$Si(O-n-C_3H_7)_4$;$Si(O-isoC_3H_7)_4$ ; $Si(OC_2H_4OCH_3)_4$ ;$CH_3Si(OCH_3)_3$ ;

$CH_2=CHSi(OCH_3)_3$ ; $CH_3Si(OC_2H_4OCH_3)_3$ ;

$ClCH_2Si(OC_2H_5)_3$ ; $CH_2 = CHSi(OC_2H_4OCH_3)_3$.

A tout ou partie des silanes monomères ci-dessus décrits on peut substituer des polyalcoxypolysiloxanes dont chaque molécule compte au moins deux, de préférence trois atomes Y', les autres valences du silicium sont satisfaites par des liaison siloxaniques SiO et SiR.

Comme exemples d'agents réticulants polymères on peut citer le polysilicaté d'éthyle.

On utilise généralement de 0,1 à 20 parties en poids d'agent réticulant de formule (2) pour 100 parties en poids de polymère de formule (1).

Les compositions polyorganosiloxanes durcissables en élastomère du type décrit ci-dessus comportent de 0,001 à 10 parties en poids, de préférence de 0,05 à 3 parties en poids de catalyseur de condensation (C) pour 100 parties en poids de polysiloxane de formule (1).

La teneur en catalyseur de condensation des compositions mono-composantes est généralement beaucoup plus faible que celle utilisée dans les compositions bi-composantes et est généralement comprise entre 0,001 et 0,05 parties en poids pour 100 parties en poids de polysiloxane de formule (2).

Les agents réticulants (D) de formule (2), qu'ils soient utilisables pour la préparation des compositions monocomposantes ou bicomposantes, sont des produits accessibles sur le marché des silicones, de plus leur emploi dans les compositions durcissant dès la température ambiante est connu, il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Les compositions selon l'invention peuvent comporter en outre des charges (E) renforçantes ou semi-renforçantes ou de bourrage qui sont de préférence choisies parmi les charges siliceuses, les silices de combustion et les silices de précipitation.

Elles ont une surface spécifique, mesurée selon les méthodes BET, d'au moins 50 $m^2/g$, de préférence supérieure à 70 $m^2/g$, une dimension moyenne des particules primaires inférieure à 0,1 μm (micromètre) et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane.

Lors de ce traitement, les silices peuvent accroître leur poids de départ jusqu'à un taux de 20 %, de préférence 18 % environ.

Les charges semi-renforçantes ou de bourrage ont un diamètre particulaire supérieur à 0,1 μm (micromètre) et sont choisies parmi le quartz broyé, les argiles calcinées et les terres de diatomées.

On peut généralement utiliser de 0 à 100 parties, de préférence de 5 à 50 parties de charge (E) pour 100 parties d'huile (A).

Les bases de compositions de silicone définies de façon générale ci-dessus sont bien connues de l'homme de métier. Elles sont décrites en détail dans la littérature en particulier dans de nombreux brevets et la plupart sont disponibles dans le commerce.

Ces compositions réticulent à température ambiante en présence d'humidité apportée par l'humidité de l'air et/ou contenue dans la composition. Elles se divisent en deux grandes familles. La première famille est constituée par les compositions mono-composantes ou à un seul emballage stables au stockage à l'abri de l'humidité de l'air et durcissant en élastomère à l'humidité de l'air. Dans ce cas le catalyseur de condensation (C) utilisé est un composé métallique généralement un composé de l'étain, du titane ou du zirconium.

Selon la nature des groupements condensables ou hydrolysables ces compositions mon-composantes sont dites acides, neutres, ou basiques.

Comme compositions acides, on peut citer par exemple les compositions décrites dans les brevets US-A-3 035 016, US-A-3 077 465, US-A-3 133 891, US-A-3 409 573, US-A-3 438 930, US-A-3 647 917 et US-A-3 886 118.

Comme compositions neutres, on peut utiliser par exemple les compositions décrites dans les brevets US-A-3 065 194, US-A-3 542 901, US-A-3 689 454, US-A-3 779 986, GB-A-2 052 540, US-A-4 417 042 et EP-A-69 256.

Comme compositions basiques on peut par exemple utiliser les compositions décrites dans les brevets US-A-3 378 520, US-A-3 364 160, US-A-3 417 047, US-A-3 464 951, US-A-3 742 004 et US-A-3 758 441.

On peut également utiliser selon une variante préférée les compositions coulantes mono-composantes telles que celles décrites dans les brevets US-A-3 922 246, US-A-3 956 280 et US-A-4 143 088.

La deuxième famille qui est la famille préférée dans le cadre de la présente invention est constituée par les compositions à deux composantes ou à deux emballages comportant généralement une huile (A) alpha-oméga-dihydroxydiorganopolysiloxane, un silane (D) ou un produit provenant de l'hydrolyse partielle de ce silane, et un catalyseur (C) qui est un composé métallique de préférence un composé de l'étain et/ou une amine.

Des exemples de telles compositions sont décrits dans les brevets US-A-3 678 002, US-A-3 888 815, US-A-3 933 729, US-A-4 064 096 et GB-A-2 032 936.

Parmi ces compositions on préfère plus particulièrement les compositions bi-composantes comportant :
- (A) : 100 parties d'une huile alpha-oméga-dihydroxydiorganopolysiloxane de viscosité de 50 à 300 000 mPa.s dont les radicaux organiques sont choisis parmi les radicaux méthyle, éthyle, vinyle, phényle et trifluoro-3,3,3 propyle, au moins 60 % en nombre étant des radicaux méthyle, jusqu'à 20 % en nombre étant des radicaux phényle, au plus 2 % étant des radicaux vinyle,
- (C) : 0,01 à 1 partie (calculée en poids d'étain métal) d'un composé catalytique de l'étain,
- (D) : 0,5 à 15 parties d'un polyalcoxysilane ou polyalcoxysiloxane,
- (E) : 0 à 100 parties, de préférence 5 à 50 parties de charge minérale siliceuse.

Les catalyseurs (C) à l'étain sont abondamment décrits dans la littérature ci-dessus, ce peut être en particulier un sel d'étain d'un acide mono- ou dicarboxylique. Ces carboxylates d'étain sont décrits notamment dans l'ouvrage de NOLL (Chemistry and Technology of Silicones, page 337, Academic Press, 1968, 2ème édition).

On peut en particulier citer le naphténate, l'octanoate, l'oléate, le butyrate, le dilaurate de dibutylétain, le diacétate de dibutylétain.

On peut également utiliser comme composé catalytique à l'étain le produit de réaction d'un sel d'étain, en particulier d'un dicarboxylate d'étain sur du polysilicate d'éthyle comme décrit dans le brevet US-A-3-186 963. On peut également utiliser le produit de réaction d'un dialkyldialcoxysilane sur un carboxylate d'étain comme décrit dans le brevet US-A-3 862 919.

On peut également utiliser le produit de réaction d'un silicate d'alkyle ou d'un alkyltrialcoxysilane sur le diacétate de dibutylétain comme décrit dans le brevet belge BE-A-842 305.

Parmi les agents de réticulation (D) on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Les silicates d'alkyle peuvent être choisis parmi le silicate de méthyle, le silicate d'éthyle, le silicate d'isopropyle, le silicate de n-propyle et les polysilicates choisis parmi les produits d'hydrolyse partielle de ces silicates ; ce sont des polymères constitués d'une proportion importante de motifs de formule $(R^4O)_3SiO_{0,5}$, $R^4OSiO_{1,5}$, $(R^4O)_2SiO$ et $SiO_2$ ; le symbole $R^4$ représentant les radicaux méthyle, éthyle, isopropyle, n-propyle. Pour les caractériser on se base habituellement sur leur teneur en silice qui est établie par dosage du produit d'hydrolyse d'un échantillon.

On peut en particulier utiliser comme polysilicate, un silicate d'éthyle partiellement hydrolysé commercialisé sous la marque "Ethyl Silicate-40"[R] par Union Carbide Corporation, ou un silicate de propyle partiellement hydrolysé.

Les compositions selon l'invention peuvent être mises en formes, extrudées ou en particulier moulées suivant des formes variées, puis être durcies à température ambiante en un élastomère à l'humidité atmosphérique ou par addition d'eau. Un léger chauffage à une température de 20 à 150°C peut accélérer le durcissement.

De façon surprenante on a découvert que ces compositions de silicones réticulées présentent des caractéristiques physiques suffisantes pour les applications envisagées.

Un quatrième groupe de silicones utilisables selon l'invention concerne en effet une composition de silicone polyaddition durcissable en un élastomère par des réactions d'hydrosilylation, caractérisée en ce qu'elle comporte :

– (A) : au moins un organopolysiloxane présentant par molécule au moins deux groupes vinyle liés au silicium,

– (B) : au moins un organopolysiloxane présentant par molécule au moins trois atomes d'hydrogène liés au silicium,

– (C) : une quantité catalytiquement efficace d'un catalyseur qui est un composé d'un métal du groupe du platine.

Dans ce qui suit ou ce qui précède, sauf mentions contraires, les pourcentages et parties sont en poids.

Les quantités de (A) et (B) sont généralement choisies de manière que le rapport molaire des atomes d'hydrogène liés au silicium dans (B) aux radicaux vinyle liés au silicium dans (A) soit compris généralement entre 0,4 et 10, de préférence entre 0,6 et 5.

Les groupes vinyle dans (A) et les atomes d'hydrogène dans (B) sont généralement liés à des atomes de silicium différents.

Ces compositions réticulent par réaction d'addition (dénommée également réaction d'hydrosilylation), catalysée par un composé d'un métal du groupe du platine, d'un groupe vinyle de l'organopolysiloxane (A) sur une fonction hydrure de l'organopolysiloxane (D).

L'organopolysiloxane vinylé (1) peut être un organopolysiloxane présentant des motifs siloxyle de formule :

$$Y_a Z_b \ SiO_{\frac{(4-a-b)}{2}} \qquad\qquad (1)$$

dans laquelle Y est un groupe vinyle, Z est un groupe hydrocarboné monovalent n'ayant pas d'action défavorable sur l'activité du catalyseur. Z est généralement choisi parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle, a est 1 ou 2, b est 0, 1, ou 2 et a + b est compris entre 1 et 3, éventuellement tous les autres motifs étant des motifs de formule moyenne :

$$Z_c \ SiO_{\frac{4-c}{2}} \qquad\qquad (2)$$

dans laquelle Z a la même signification que ci-dessus et c a une valeur comprise entre 0 et 3.

L'organopolysiloxane (B) peut être un organohydrogénopolysiloxane comportant des motifs siloxyle de formule :

$$H_d W_e \ SiO_{\frac{4-d-e}{2}} \qquad\qquad (3)$$

dans laquelle W est un groupe hydrocarboné monovalent n'ayant pas d'action défavorable sur l'activité du catalyseur et répondant à la même définition que Z, d est 1 ou 2, e est 0, 1 ou 2, d + e a une valeur comprise entre 1 et 3, éventuellement tous les autres motifs étant des motifs de formule moyenne :

$$W_g \ SiO_{\frac{4-g}{2}} \qquad\qquad (4)$$

dans laquelle W a la même signification que ci-dessus, g a une valeur comprise entre 0 et 3.

Toutes les valeurs limites de a, b, c, d, et g sont incluses.

L'organopolysiloxane (A) peut être uniquement formé de motifs de formule (1) ou peut contenir en outre des motifs de formule (2).

L'organopolysiloxane (A) peut présenter une structure linéaire ramifiée cyclique ou en réseau. Le degré de polymérisation est 2 ou plus et est généralement inférieur à 5 000. Par ailleurs, si l'organopolysiloxane (A) est linéaire, il présente une viscosité à 25°C inférieure à 500 000 mPa.s.

Z est généralement choisi parmi les radicaux méthyle, éthyle et phényle, 60 % molaire au moins des radicaux Z étant des radicaux méthyle.

Les organopolysiloxanes (A) et (B) sont bien connus et sont par exemple décrits dans les brevets US-A-3 220 972, US-A-3 284 406, US-A-3 436 366, US-A-3 697 473 et US-A-4 340 709.

Des exemples de motifs siloxyle de formule (1) sont le motif vinyldiméthylsiloxyle, le motif vinylphénylméthylsiloxyle, le motif vinylsiloxyle et le motif vinylméthylsiloxyle.

Des exemples de motifs siloxyle de formule (2) sont les motifs $SiO_{4/2}$, diméthylsiloxane, méthylphénylsiloxane, diphénylsiloxane, méthylsiloxane et phénylsiloxane.

Des exemples d'organopolysiloxane (A) sont les diméthylpolysiloxanes à extrémités diméthylvinylsiloxyle, les copolymères méthylvinyldiméthylpolysiloxanes à extrémités triméthylsiloxyle, les copolymères méthylvinyldiméthylpolysiloxanes à extrémités diméthylvinylsiloxyle, les méthylvinylpolysiloxanes cycliques.

L'organopolysiloxane (B) peut être uniquement formé de motifs de formule (3) ou comporte en plus des motifs de formule (4).

L'organopolysiloxane (B) peut présenter une structure linéaire ramifiée cyclique ou en réseau. Le degré de polymérisation est 2 ou plus et est généralement inférieur à 5 000.

Le groupe W a la même signification que le groupe Z ci-dessus.

Des exemples de motifs de formule (3) sont :

$H(CH_3)_2SiO_{1/2}$, $HCH_3SiO_{2/2}$, $H(C_6H_5)SiO_{2/2}$.

Les exemples de motifs de formule (4) sont les mêmes que ceux donnés plus haut pour les motifs de formule (2).

Des exemples d'organopolysiloxane (B) sont :

– les diméthylpolysiloxanes à extrémités hydrogénodiméthylsilyle, les copolymères diméthylhydrogénométhylpolysiloxanes à extrémités triméthylsiloxyle, les copolymères diméthylhydrogénométhylpolysiloxanes à extrémités hydrogénodiméthylsiloxyle, les hydrogénométhylpolysiloxanes à extrémités triméthylsiloxyle, les méthylvinylpolysiloxanes cycliques.

Le rapport du nombre d'atomes d'hydrogène liés au silicium dans l'organopolysiloxane (B) sur le nombre de groupes à insaturation alcényle de l'organopolysiloxane (A) est compris entre 0,4 et 10, de préférence entre 0,6 et 5. Ce rapport peut être toutefois compris entre 2 et 5, si on souhaite faire des mousses d'élastomères.

L'organopolysiloxane (A) et/ou l'organopolysiloxane (2) peut être dilué dans un solvant organique non toxique compatible avec les silicones.

Les organopolysiloxanes (A) et (B) en réseau sont dénommés couramment résines silicones.

Les bases de compositions silicones polyaddition peuvent ne comporter que des organopolysiloxanes (1) et (2) linéaires comme par exemples celles décrites dans les brevets américains précités : US-A-3 220 972, US-A-3 697 473 et US-A-4 340 709, ou comporter à la fois des organopolysiloxanes (A) et (B) ramifiés ou en réseau comme par exemple celles décrites dans les brevets américains précités : US-A-3 284 406 et US-A-3 436 366.

Les catalyseurs (C) sont également bien connus.

On utilise de préférence les composés du platine et du rhodium.

On peut en particulier utiliser les complexes du platine et d'un produit organique décrit dans les brevets américains US-A-3 159 601, US-A-3 159 602, US-A-3 220 972 et les brevets europeens EP-A-57 459, EP-A-188 978 et EP-A-190 530, les complexes du platine et d'organopolysiloxane vinylé décrits dans les brevets américains : US-A-3 419 593, US-A-3 715 334, US-A-3 377 432 et US-A-3 814 730.

On peut en particulier utiliser les complexes du rhodium décrits dans les brevets britaniques : GB-A-1 421 136 et GB-A-1 419 769.

Le catalyseur généralement préféré est le platine.

Dans ce cas la quantité pondérale de catalyseur(C) calculée en poids de platine-métal est généralement comprise entre 2 et 600 ppm, en général entre 5 et 200 ppm basés sur le poids total des organopolysiloxanes (A) et (B).

Les compositions préférées, dans le cadre de la présente invention sont celles qui comportent :

– (A) : 100 parties d'une huile diorganopolysiloxane bloquée à chaque extrémité de sa chaîne par un motif vinyldiorganosiloxyle dont les radicaux organiques liés aux atomes de silicium sont choisis parmi les radicaux méthyle, éthyle et phényle, au moins 60 % molaire de ces radicaux étant des radicaux méthyle, de viscosité 100 à 500 000, de préférence de 1 000 à 200 000 mPa.s à 25°C,

– (B) : au moins un organohydrogénopolysiloxane choisi parmi les homopolymères et copolymères liquides linéaires ou en réseau présentant par molécule au moins 3 atomes d'hydrogène liés à des atomes de silicium différents et dont les radicaux organiques liés aux atomes de silicium sont choisis parmi les radicaux méthyle, éthyle et 60 % au moins de ces radicaux étant des radicaux méthyle, le produit (B) étant utilisé en quantité telle que le rapport molaire des fonctions hydrure sur les groupes vinyle sont compris entre 1,1 et 4,

– (C) : une quantité catalytiquement efficace d'un catalyseur au platine.

De façon encore plus préférée jusqu'à 50 % en poids du polymère (A) est remplacé par un copolymère en réseau comportant les motifs triméthylsiloxyle, méthylvinylsiloxyle et $SiO_{4/2}$ dans lequel 2,5 à 10 % molaire des atomes de silicium comportent un groupe vinyle et dans lequel le rapport molaire des groupes triméthylsiloxyle au groupe $SiO_{4/2}$ est compris entre 0,5 et 1.

Les compositions selon l'invention peuvent comporter en outre des charges (E) renforçantes ou semi-renforçantes ou de bourrage, qui sont de préférence choisies parmi les charges siliceuses.

Les charges renforçantes sont choisies parmi les silices de combustion et les silices de précipitation. Elles ont une surface spécifique, mesurée selon les méthodes BET, d'au moins 50 m²/g, de préférence supérieure à 70 m²/g, une dimension moyenne des particules primaires inférieures à 0,1 μm (micromètre) et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane.

Lors de ce traitement, les silices peuvent accroître leur poids de départ jusqu'à un taux de 20 %, de préférence 18 % environ.

Les charges semi-renforçantes ou de bourrage ont un diamètre particulaire supérieur à 0,1 μm (micromètre) et sont choisies de préférence parmi le quartz broyé, les argiles calcinées et les terres de diatomées.

On peut généralement utiliser de 5 à 100 parties, de préférence de 5 à 50 parties de charge (E) pour 100 parties de la somme des organopolysiloxanes (A) + (B).

Les compositions polyaddition sont généralement stockées en deux emballages. En effet elles réticulent dès qu'on mélange tous ces constituants. Si l'on veut retarder cette réticulation pour obtenir une bonne homogénéisation de la matière active, on peut ajouter à la composition un inhibiteur du catalyseur au platine.

Ces inhibiteurs sont bien connus. On peut en particulier utiliser les amines organiques, les silazanes, les oximes organiques, les diesters de diacides carboxyliques, les alcools acétyléniques, les cétones acétyléniques, les vinylméthylcyclopolysiloxanes (voir par exemple US-A-3 445 420 et US-A-3 989 667). L'inhibiteur est utilisé à raison de 0,005 à 5 parties, de préférence 0,01 à 3 parties pour 100 parties du constituant (A).

Pour obtenir une bonne homogénéisation de répartition de la matière active, il est en effet souhaitable que la matrice silicone présente une certaine viscosité de l'ordre de 5 000 à 30 000 mPa.s à 25°C.

Une telle viscosité peut être obtenue par une préréticulation, cette préréticulation étant bloquée à la viscosité désirée par addition d'un inhibiteur. On dispose ainsi de suffisamment de temps pour bien homogénéiser la matière active au sein de la matrice silicone.

La réticulation est alors achevée par chauffage de la matrice à une température telle que l'inhibiteur n'a plus d'effet sur l'action catalytique du platine.

Les compositions selon l'invention peuvent être malaxées à froid telles quelles et être mises en formes, notamment moulées sous des formes variées.

L'agent auxiliaire hydrosoluble utilisable selon l'invention doit être à la fois très soluble dans l'eau et inerte chimiquement vis-à-vis de la matière active et de la matière silicone. Cet agent auxiliaire peut être un sel minéral ou organique, la préférence étant donnée aux sels minéraux, en particulier les sels alcalins et alcalino-terreux d'acides forts, comme par exemple, d'acide sulfurique, halohydrique, nitrique. On peut citer à titre d'exemple les chlorures, iodures, sulfates ou nitrates alcalins, en particulier de sodium, de potassium et ammonium.

Les quatre groupes de silicones décrits ci-dessus présentent la même propriété à savoir que lorsqu'ils contiennent une matière active et un sel auxiliaire tel que défini ci-dessus, dispersés de façon uniforme, les compositions obtenues peuvent libérer la matière active de façon contrôlée dans un milieu aqueux ou dans l'atmosphère humide, ainsi que dans la plante à traitée pendant une longue durée.

On a décrit des procédés de fabrication des compositions selon l'invention par mélanges intimes des bases polysiloxanes avec la matière active sous forme hydrosoluble, de préférence solide, puis fabrication de l'élastomère chargé. Cette dernière technique est préférée mais toute autre technique permettant d'obtenir ces compositions peut être utilisée.

L'avantage considérable apporté par la matrice silicone est donc qu'il est très facile d'extrapoler la diffusion continue de la matière active après une mesure de la quantité libérée représentant 10 à 15% de la matière initiale puisque l'on sait que la cinétique de diffusion est d'ordre 0 et qu'au moins 80 % de la matière active sera libéré suivant cette cinétique.

La composition selon l'invention comprenant la matière silicone contenant la matière active et le sel auxiliaire peut se présenter à l'état solide rigide ou plus ou moins élastique. Elle peut se présenter sous des formes très variées en fonction des applications envisagées notamment de la matière active et la forme de la plante à traiter ainsi que du problème à résoudre.

Elle peut notamment se présenter sous forme de feuille, bande, bandelette qui peuvent être appliquées soit tout contre une partie quelconque de la plante à traiter soit à distance mais au voisinage de celle-ci dans une atmosphère gazeuse,de préférence dans l'air humide ou dans un milieu liquide aqueux.

Il peut être également avantageux d'utiliser la composition selon l'invention sous la forme d'éléments de petites dimensions de formes variées tels que des cubes, des parallélépipèdes rectangles, des cylindres, des sphères dont les paramètres fondamentaux sont les suivants :

– la nature de la matière active,
– le diamètre moyen (granulométrie) g des particules de la matière active dans le cas préféré où cette dernière est un solide,
– la teneur t de la matière active au sein de la matrice,
– le rapport R de la surface au volume de l'élément,
– et de manière générale selon la géométrie du système.

La nature de la matière active et sa granulométrie définissent sa vitesse de diffusion V à travers la matrice. Plus g est petit et plus V est lent et inversement.

Plus t est grand et plus le flux de la matière active est élevé et inversement.

Plus R est grand et plus le flux élué de matière active est grand et inversement.

L'homme de métier par des expériences de routine peut, sans difficultés, aboutir rapidement au résultat visé en extrapolant le temps d'élution théorique qui correspondra au temps réel de diffusion de la matière active.

Comme matière active à action biologique agricole hydrosoluble ou non, on peut citer des matières actives agrochimiques telles que les fongicides, bactéricides, algicides, molluscicides, insecticides, nématicides, herbicides, régulateurs de croissance ou encore des engrais ou fertilisants.

Comme exemples de matière actives agrochimiques, on peut citer des fongicides tels que les tris O-éthylphosphonates de sodium, de calcium ou d'aluminium (Phoséthyl-A1), des sels de l'acide phosphoreux, notamment les sels alcatins et alcalino-terreux, des régulateurs de croissance, des herbicides tels que les acides phénoxy acétiques ou propioniques substitués comme les acides dichloro 2-4 phénoxy acétiques (2,4 D), chloro-2 méthyl-4 phénoxy acétique (MCPA), dichloro 2-4 phénoxy propionique -2 (2,4-DP), chloro-2 méthyl-4 phénoxy propionique -2 (MCPP ou mécoprop), et leurs sels alcalins, alcalino-terreux ou d'amines ou d'alcanol amines, les sels minéraux alcalins alcalino-terreux ou d'amines, ou d'alcanol amine de la N (phosphonométhyl) glycine (glyphosate), des halogénures de bipyridyldiylium (diquat et paraquat), des insecticides tels que l'aldoxycarbe.

Les exemples ci-après illustrent les compositions selon l'invention et leur application, sans que cette illustration limite la portée de l'invention.

Exemple 1 :

Préparation de la composition :

On mélange intimement à l'aide d'un malaxeur les ingrédients suivants :
* 100 parties d'une gomme (A) diméthylméthylvinylpolysiloxane bloquée à chacune de ses deux extrémités par un motif triméthylsiloxy et comprenant dans sa chaine 99,8 % molaire de motif diméthylsiloxy et 0,2 % molaire de motifs vinylméthylsiloxy et de viscocité 10 millions de mPa.s à 25°C ;
* 43,5 parties de charge (B) qui est un silice de combustion traité D4 (octaméthylcyclotetrasiloxane) de surface spécifique BET de 300 m2/g ;
* 1 partie d'un diméthylpolysiloxane linéaire bloqué à ses deux extrémités par des groupements diméthylhydroxysiloxane de viscosité 50 mPa.s ;
* 0,2 partie d'octométhyltétracyclosiloxane ;
* 36,1 parties d'éthylphosphite d'aluminium micronisé (c).

Le malaxage est arrêté 30 minutes après la fin de l'introduction de la silice. On enlève du malaxeur la composition homogène venant d'être préparée et qui est appelée le mélange maître (MM).

On transfère le MM sur un mélangeur à cylindres pour incorporer pour 100 parties de MM :

\* 0,5 parties de diméthyl-2,5 di(tertiobutyle peroxy-2,5) hexane.

La composition catalysée se détache aisément des cylindres du mélangeur.

Elle est ensuite injectée sous pression de 5000 à 20000 Psi dans un moule ayant les dimensions suivantes : L = 20 cm, I = 20 cm, e = 0,2 cm.

La réticulation est réalisée à 150°C pendant quelques minutes.

Des bandelettes de L = 5 cm et de I = 2,5 cm sont ensuite découpées pour le test de libération in vitro.

Deux tests de libération in vitro sont réalisés :

\* une libération dans de l'eau,

\* une libération en atmosphère humide.

<u>Protocole expérimental de la mesure de la cinétique d'élution dans l'eau :</u>

La matrice est placé dans un récipient de 100 ml d'eau distillée, thermostatée à 20°C.

Le récipient est équipé d'un système d'agitation magnétique, animé d'un mouvement de rotation lent (100 tr/min) assurant l'homogénéité de la solution. Il est recouvert d'un couvercle afin de minimiser l'évaporation de l'eau.

Des prélèvements journaliers de 1 ml sont réalisés dans les premiers temps de l'élution, et hebdomadaires au bout de 15 jours d'élution.

La concentration en éthylphosphite d'aluminium est déterminée par dosage de l'aluminium par absorption atomique.

Dans le tableau 1 sont rassemblés les résultats de la cinétique d'élution.

| Temps (j) | Q/Qo (%) |
|---|---|
| 0,3 | 0.8 |
| 2 | 5.5 |
| 6 | 11.74 |
| 9 | 15.72 |
| 13 | 20.63 |
| 30 | 25.08 |
| 42 | 44.57 |

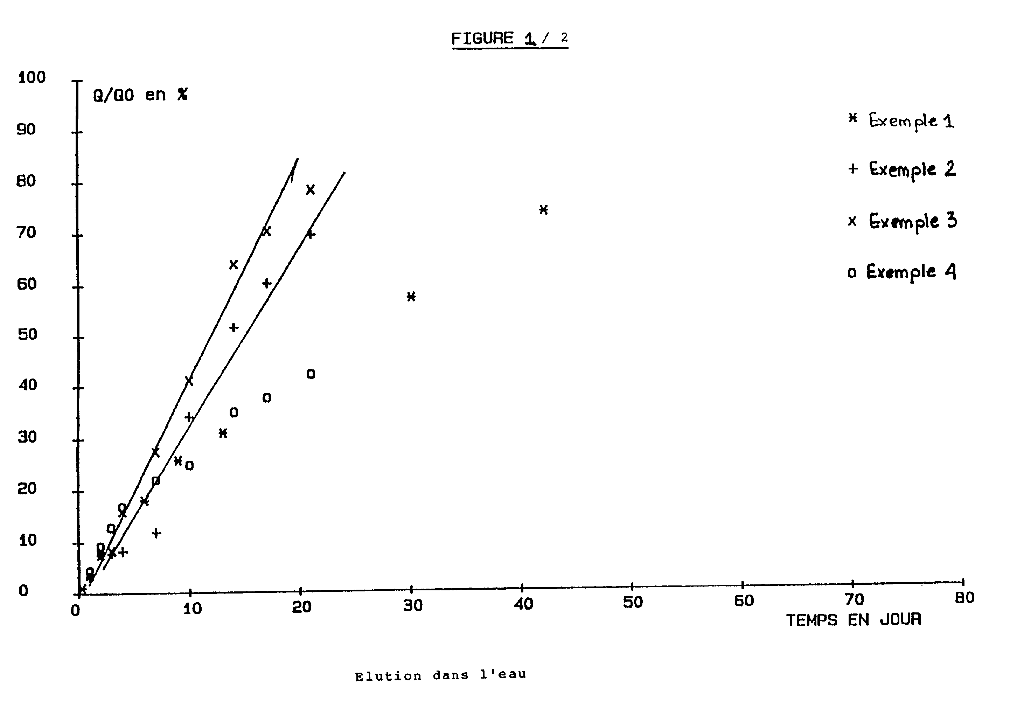

La courbe de libération contrôlée est reportée sur la figure 1 en annexe.

<u>Protocole expérimental de la mesure de la cinétique d'élution en atmosphère humide :</u>

Pour vérifier que le principe actif incorporé dans l'élastomère peut être dispensé dans le milieu humide ambiant, nous avons réalisé le test suivant :

La matrice est suspendue à l'aide d'une nacelle en inox dans un milieu confiné où une atmosphère de 100% d'hygrométrie relative est maintenue. La libération est suivie par dosage de l'aluminium dans la phase aqueuse (100 ml) contenue dans ledit récipient.

Dans le tableau 2 sont rassemblés les résultats de la cinétique d'élution.

| Temps (j) | Q/Qo (%) |
|---|---|
| 42 | 2.55 |
| 55 | 5.05 |
| 79 | 13.17 |
| 84 | 13.66 |
| 91 | 14.06 |

Il existe une période de latence de 42 jours avant élution de la matière active.

Exemple 2 :

Préparation de la composition :

On mélange intimement à l'aide d'un malaxeur les ingrédients suivants :

* 100 parties d'une gomme (A) diméthylméthylvinylpolysiloxane bloquée à chacune de ses deux extrémités par un motif triméthylsiloxy et comprenant dans sa chaine 99,8 % molaire de motif diméthylsiloxy et 0,2 % molaire de motifs vinylméthylsiloxy et de viscosité 10 millions de mPa.s à 25°C ;

* 43,5 parties de charge (B) qui est un silice de combustion traité D4 (octaméthylcyclotétrasiloxane) de surface spécifique BET de 300 m2/g ;

* 1 partie d'un diméthylpolysiloxane linéaire bloqué à ses deux extrémités par des groupements diméthylhydroxysiloxane de viscosité 50 mPa.s ;

* 0,2 partie d'octométhyltétracyclosiloxane ;

* 44,4 parties d'éthylphosphite d'aluminium micronisé (c) ;

* 33,3 parties de sulfate d'ammonium de granulométrie inférieure à 50 μm.

Le malaxage est arrêté 30 minutes après la fin de l'introduction de la silice. On enlève du malaxeur la composition homogène venant d'être préparée et qui est appelée le mélange maître (MM).

On transfère le MM sur un mélangeur à cylindres pour incorporer pour 100 parties de MM :

* 0,5 parties de diméthyl-2,5 di(tertiobutyle peroxy-2,5) hexane.

La composition catalysée se détache aisément des cylindres du mélangeur.

Elle est ensuite injectée sous pression de 5000 à 20000 Psi dans un moule ayant les dimensions suivantes : L = 20 cm, l = 20 cm, e = 0,2 cm.

La réticulation est réalisée à 150°C pendant quelques minutes.

Des bandelettes de L = 5 cm et de l = 2,5 cm sont ensuite découpées pour le test de libération in vitro.

Deux tests de libération in vitro sont réalisés :

* une libération dans de l'eau,

* une libération en atmosphère humide.

Cinétique d'élution dans l'eau :

On procède comme à l'exemple 1.

Dans le tableau 3 sont rasssemblés les résultats de la cinétique d'élution.

| Temps (j) | Q/Qo (%) |
|-----------|----------|
| 1 | 3.31 |
| 2 | 7.72 |
| 3 | 7.87 |
| 4 | 8.25 |
| 7 | 11.79 |
| 10 | 34.11 |
| 14 | 51.52 |
| 17 | 60.20 |
| 21 | 69.55 |

La courbe de libération contrôlée est reportée sur la figure 1 en annexe.

Cinétique d'élution en atmosphère humide :

On procède comme à l'exemple 1.

Dans le tableau 4 sont rassemblés les résultats de la cinétique d'élution. On peut noter que la période de latence a fortement diminué.

| Temps (j) | Q/Qo (%) |
|-----------|----------|
| 1 | 0.00 |
| 2 | 0.42 |
| 3 | 0.51 |
| 4 | 0.6 |
| 7 | 2.66 |
| 10 | 5.59 |
| 14 | 7.35 |
| 17 | 8.2 |
| 21 | 9.54 |
| 24 | 11.95 |
| 25 | 12.77 |
| 31 | 13.46 |
| 38 | 14.56 |
| 51 | 26.64 |
| 59 | 30.41 |

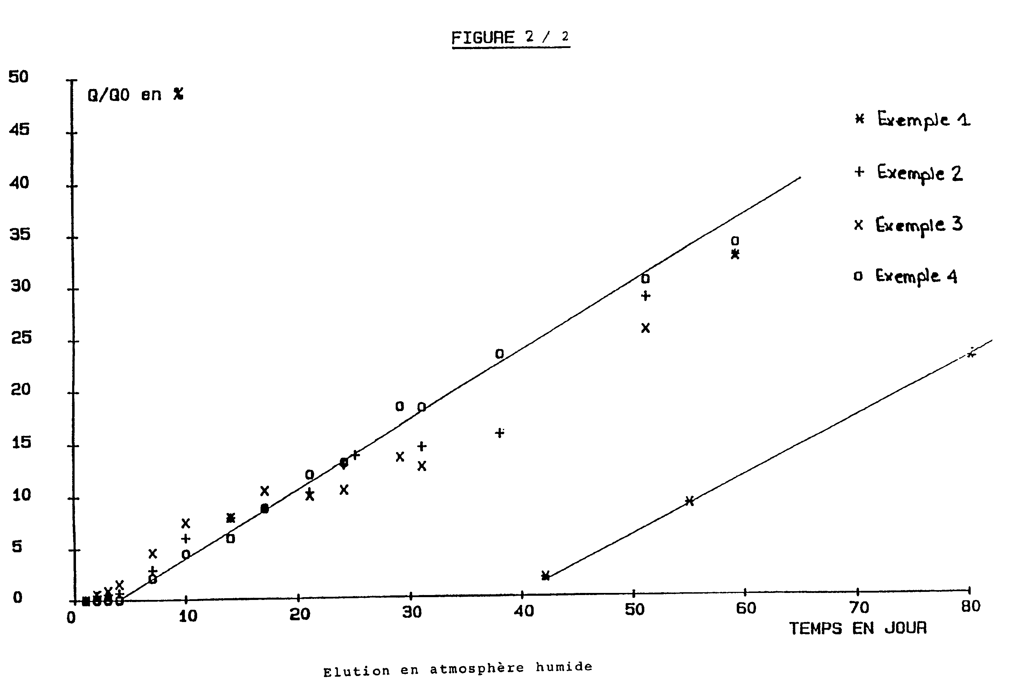

La courbe d'élution correspondante est reportée figure 2.

Exemple 3 :Composition :

On mélange intimement à l'aide d'un malaxeur les ingrédients suivants :
* 100 parties d'une gomme (A) diméthylméthylvinylpolysiloxane bloquée à chacune de ses deux extrémités par un motif triméthylsiloxy et comprenant dans sa chaine 99,8 % molaire de motif diméthylsiloxy et 0,2 % molaire de motifs vinylméthylsiloxy et de viscosité 10 millions de mPa.s à 25°C ;
* 43,5 parties de charge (B) qui est un silice de combustion traité D4 (octaméthylcyclotétrasiloxane) de surface spécifique BET de 300 m2/g ;
* 1 partie d'un diméthylpolysiloxane linéaire bloqué à ses deux extrémités par des groupements diméthylhydroxysiloxane de viscosité 50 mPa.s ;
* 0,2 partie d'octométhyltétracyclosiloxane ;
* 48,1 parties d'éthylphosphite d'aluminium micronisé (c) ;
* 48,1 parties de sulfate d'ammonium de granulométrie inférieure à 50 μm.

Le malaxage est arrêté 30 minutes après la fin de l'introduction de la silice. On enlève du malaxeur la composition homogène venant d'être préparée et qui est appelée le mélange maître (MM).

On transfère le MM sur un mélangeur à cylindres pour incorporer pour 100 parties de MM :
* 0,5 parties de diméthyl-2,5 di(tertiobutyle peroxy-2,5) hexane.

Comme à l'exemple 2, on prépare des bandelettes de L = 5 cm et de l = 2,5 cm pour le test de libération in vitro.

Deux tests de libération in vitro sont réalisés :
* une libération dans de l'eau,
* une libération en atmosphère humide.

Cinétique d'élution dans l'eau :

On procède comme à l'exemple 1.
Dans le tableau 5 sont rasssemblés les résultats de la cinétique d'élution.

| Temps (j) | Q/Qo (%) |
|:---------:|:--------:|
| 1 | 3.30 |
| 2 | 7.84 |
| 3 | 7.76 |
| 4 | 14.72 |
| 7 | 25.55 |
| 10 | 38.24 |
| 14 | 59.54 |
| 17 | 65.46 |
| 21 | 72.85 |

La courbe de libération contrôlée est reportée sur la figure 1 en annexe.

Cinétique d'élution en atmosphère humide :

On procède comme à l'exemple 1.

Dans le tableau 6 sont rassemblés les résultats de la cinétique d'élution. On peut noter que la période de latence est quasi inexistante.

| Temps (j) | Q/Qo (%) |
|:---------:|:--------:|
| 1 | 0.00 |
| 2 | 0.57 |
| 3 | 0.89 |
| 4 | 1.52 |
| 7 | 4.57 |
| 10 | 7.49 |
| 14 | 7.93 |
| 17 | 10.43 |
| 21 | 9.90 |
| 24 | 10.42 |
| 29 | 13.49 |
| 51 | 25.52 |
| 59 | 32.56 |

La courbe d'élution correspondante est reportée figure 2.

Exemple 4 :

On procéde comme à l'exemple 3 sauf qu'on remplace les 48,1 parties de sulfate d'ammonium par 48,1 parties de sulfate de potassium de diamètre inférieur à 50 µm.

Cinétique dans l'eau :

On procède comme à l'exemple 1. Les résultats de la cinétique d'élution sont rassemblés dans le tableau 7.

| Temps (j) | Q/Qo (%) |
|-----------|----------|
| 1 | 4.13 |
| 2 | 8.61 |
| 3 | 11.93 |
| 4 | 15.61 |
| 7 | 20.46 |
| 10 | 23.14 |
| 14 | 32.5 |
| 17 | 34.98 |
| 21 | 39.21 |

La courbe de libération contrôlée est reportée sur la figure 1 en annexe.

Cinétique d'élution en atmosphère humide :

On procède comme à l'exemple 1.

Dans le tableau 8 sont rassemblés les résultats de la cinétique d'élution.

| Temps (j) | Q/Qo (%) |
|-----------|----------|
| 1 | 0.00 |
| 2 | 0.00 |
| 3 | 0.00 |
| 4 | 0.00 |
| 7 | 2.09 |
| 10 | 4.44 |
| 14 | 5.91 |
| 17 | 8.77 |
| 21 | 11.95 |
| 24 | 13.04 |
| 29 | 18.28 |
| 31 | 18.17 |
| 38 | 23.24 |
| 51 | 30.26 |
| 59 | 33.88 |

La période de latence est légèrement plus longue avec ce sel qu'avec le sulfate d'ammonium.

La courbe d'élution correspondante est reportée figure 2.

Exemple 5 :

* Préparation de la composante A :

On homogénéise à température ambiante dans un malaxeur, les consitituants :

a) 25 parties de résine silicone comportant 40 % molaire de motifs $(CH_3)_3 SiO_{1/2}$, 6 % molaire de motifs $(CH_3) (CH_2 = CH)SiO_{2/2}$ et 53,5 % de motifs $SiO_{4/12}$.

b) 75 parties d'une huile diméthylpolysiloxane bloquée à chacune des extrémités de sa chaine par un motif $(CH_3) (CH_2 = CH)SiO_{1/2}$ de viscosité 3500 mPa.s à 25°C.

c) 40 ppm calculés en poids, de platine métal apporté par une solution à 0,25 % d'acide hexachloroplatinique préparée par agitation à température ambiante de 0,6 partie d'acide hexachloro platinique, 10 parties d'isopropanol, 55 parties de xylène et 6 parties de tétraméthyl-1,1,3,3,divinyl-1,3 disiloxane.

* Préparation de la composante B :

On homogénéise à température ambiante, dans un malaxeur, les constituants,suivants :

d) 45 parties de résine silicone liquide hydrogénée, préparée par hydrolyse de silicate d'éthyle et de $(CH_3)_2$ HSiCl en des quantités correspondant à une mole de SiO pour deux moles de $(CH_3)_2$ HSiCl en solution dans le toluène. Cette résine présente donc un rapport molaire théorique de motifs $(CH_3)HSiO_{1/2}$ de 2 et un rapport molaire réel de 2,23.

e) 12,5 parties de la résine a) de la partie (A).

f) 37,5 parties de l'huile vinylée b) de la partie (A). La composition élastomère est obtenue par mélange de 10 parties de la composante A à 1 partie de la composante B.

* Préparation de la composition de l'exemple 5 :

On incorpore à 100 parties de la composition élastomère 25 parties d'aldoxycarbe de granulométrie moyenne inférieure à 50 µm. Le mélange est agité, sous vide, pendant 15 minutes pour le dégazage du mélange. Le tout est ensuite coulé dans un moule préformé aux dimensions requises à savoir :

L = 5 cm, l = 2,5 cm, e = 0,2 cm.

Le recuit est réalisé une heure à 60°C.

Deux tests de libération in vitro sont réalisés :

* une libération dans de l'eau,
* une libération en atmosphère humide.

Cinétique d'élution dans l'eau :

On procède comme à l'exemple 1. La libération de la matière active est suivie par dosage de l'aldoxycarbe par chromatographie liquide.

Dans le tableau 9 sont rassemblés les résultats de la cinétique d'élution.

| Temps (j) | Q/Qo (%) |
|-----------|----------|
| 1  | 0.6  |
| 2  | 0.78 |
| 3  | 0.98 |
| 4  | 1.12 |
| 7  | 1.46 |
| 11 | 1.89 |
| 21 | 2.68 |
| 31 | 3.5  |
| 37 | 3.86 |
| 43 | 4.25 |

On peut remarquer que l'élution est très lente.

Cinétique d'élution en atmosphère humide :

On procède comme à l'exemple 1, et on mesure la libération de la matière active par dosage en chromatographie liquide de la phase aqueuse. Dans ces conditions on n'observe aucune trace de matière active au bout de 45 jours.

Exemple 6 :

A 100 parties de la composition élastomère préparée conformément à l'exemple 5 on ajoute 28.6 parties d'aldoxycarbe de granulométrie inférieure à 50 µm et 14.3 parties de chlorure de sodium de granulométrie inférieure à 50 µm.

On prépare conformément à l'exemple 5 des matrices de dimensions : L = 5 cm, l = 2,5 cm, e = 0,2 cm Que l'on place ensuite à éluer dans l'eau et en atmosphère humide.

19

Cinétique d'élution dans l'eau :

Les résultats de la cinétique d'élution sont rassemblés dans le tableau 10.

| Temps (j) | Q/Qo (%) |
|---|---|
| 1 | 1.4 |
| 4 | 3.39 |
| 8 | 7.6 |
| 12 | 12.2 |
| 15 | 15.7 |
| 19 | 18.9 |
| 22 | 21.0 |
| 25 | 22.2 |
| 29 | 24.3 |
| 35 | 27.0 |

On peut remarquer qu'en présence de NaCl l'élution est fortement accélérée (facteur proche de 7).

Cinétique d'élution en atmosphère humide :

En présence de sel l'élution de l'aldoxycarbe est possible en atmosphère humide. On observe cependant une période de latence de 4 jours.

Les résultats de la cinétique d'élution sont rassemblés dans le tableau 11.

| Temps (j) | Q/Qo (%) |
|---|---|
| 1 | 0.0 |
| 4 | 0.04 |
| 8 | 0.09 |
| 12 | 0.08 |
| 15 | 0.34 |
| 19 | 0.4 |
| 22 | 0.4 |
| 25 | 0.38 |
| 29 | 0.77 |
| 35 | 3.1 |

L'élution reste cependant très lente.

Exemple 7 :

A 100 parties de la composition élastomère préparée conformément à l'exemple 5 on ajoute 33.3 parties d'aldoxycarbe de granulométrie inférieure à 50 µm et 33.3 parties de chlorure de sodium de granulométrie inférieure à 50 µm.

On prépare conformément à l'exemple 5 des matrices de dimensions : L = 5 cm, l = 2,5 cm, e = 0,2 cm, que l'on place ensuite à éluer dans l'eau et en atmosphère humide.

Cinétique d'élution dans l'eau :

Les résultats de la cinétique d'élution sont rassemblés dans le tableau 12.

| Temps (j) | Q/Qo (%) |
|:---:|:---:|
| 1 | 1.6 |
| 4 | 6.1 |
| 8 | 12.5 |
| 12 | 17.2 |
| 15 | 20.3 |
| 19 | 22.7 |

Exemple 8 : : Efficacité biologique sur plantes.

Des colliers silicones (L = 60 cm, l = 2,75 cm, e = 0,2 cm ; poids = 40 g) obtenus selon le mode opératoire décrit à l'exemple 2, mais contenant la matière active à raison de 25 % (55,5 parties soit 10 g de tri-O-éthyl phosphonate d'aluminium) et le co- sel à raison de 15 % (33,3 parties soit 6 g de sulfate d'ammonium) sont fixés sur 10 arbres (clémentiniers) au niveau du point de greffe (10 autres arbres non munis de ces colliers servent de témoins), au temps T1.

Six colliers sont fixés de manière superposée sur chaque arbre pour avoir une dose de 60 g de matière active par arbre.

Au temps I1 = T1 + 15 jours ; soit 15 jours après la pose des colliers, on réalise plusieurs inoculations (3 à 5 inoculations par arbre) sur l'ensemble des 20 arbres avec phytophthora citrophthora par incrustation d'un fragment mycélien dans la zone sous corticale des plus grosses branches. Le diamètre initial du chancre est de l'ordre de 1 cm.

La croissance du champignon pathogène est contrôlée à I1 + 2 mois et I1 + 5 mois. On mesure alors la longueur atteinte par le chancre ; cette longueur est exprimée en cm sous forme de longueur moyenne pour chacune de deux séries de 10 arbres.

On obtient alors le tableau de résultats suivants

| EFFICACITE | LONGUEUR MOYENNE DES CHANCRES (cm) | |
|:---:|:---:|:---:|
| (Inoculation I1 = T1 + 15 j) | I1 + 60 | I1 + 150 |
| Arbres témoins (10) | 7,9 | > 10 |
| Arbres traités avec l'invention (10) | 4,3 | 4,9 |

On observe une réduction de la vitesse d'implantation du chancre dans les premiers mois (Facteur 2) et l'arrêt de la propagation du champignon à plus long terme (Facteur 2).

Le traitement tel qu'il a été réalisé avec le produit de l'invention se révèle efficace en terme d'activité immédiate mais aussi dans le temps (libération contrôlée et continue du principe actif).

Cette libération prolongée a pu être vérifiée par mesure de résidus de la matière active et son métabolite dans les feuilles de l'arbre, ce qui de plus prouve le passage de la matière active dans le système vital de l'arbre.

**Revendications**

1) Composition solide à base de polymère à action biologique agricole pour favoriser la croissance des plantes, constituée d'une quantité majoritaire d'une matière silicone, au moins partiellement réticulée ou non, perméable à la vapeur d'eau et d'une matière active à action biologique agricole légèrement soluble dans l'eau, dispersée de façon homogène dans la matière silicone et sans effet d'inhibition sur la réticulation du silicone, la matière silicone et la forme hydrosoluble de la matière active étant tels que la cinétique de libération dans un milieu non liquide, notamment solide éventuellement divisé ou dans un milieu gazeux, de la matière active par la matière silicone est sensiblement d'ordre zéro, composition caractérisée en ce que la matière active choisie a une solubilité dans l'eau au moins égale à 0,5 g/l, et en ce qu'elle contient en outre un agent auxiliaire hydrosoluble tel que sa dispersion est homogène dans la matière silicone et tel que sa présence ne vient pas inhiber la réticulation du silicone et favorise une cinétique de libération sensiblement d'ordre zéro de la matière active par la matière silicone, dans un milieu non liquide, notamment solide éventuellement divisé ou dans un milieu gazeux.

2) Composition selon la revendication 1 caractérisée en ce que la matière active et l'agent auxiliaire sont chacun présents à raison de 5 à 50 parties pour 100 parties d'organopolysiloxane de départ.

3) Composition selon la revendication 1, caractérisée en ce que la matière active est présente à raison de 15 à 40 parties en poids pour 100 parties en poids d'organopolysiloxane.

4) Composition selon l'une des revendications 1 à 3, caractérisée en ce que le rapport matière active / agent auxiliaire est compris entre 1/10 et 10/1.

5) Composition selon la revendication 4 caractérisée en ce que le rapport matière active/ agent auxiliaire est compris entre 1/5 et 5/1.

6) Composition selon l'une des revendications 1 à 5, caractérisée en ce que la matrice silicone est une composition de silicone comportant (A) une gomme diorganopolysiloxane, (B) une charge renforçante (B1) et/ou un peroxyde organique (B2).

7) Composition de silicone selon la revendication 6, caractérisée en ce que le composé (B1) est une charge renforçante siliceuse.

8) Composition selon l'une des revendications 6 et 7, caractérisée en ce qu'elle comporte :
– (A) : 100 parties en poids d'une gomme diorganopolysiloxane ayant une viscosité supérieure à 1 million mPa.s à 25°C,
– (B) : 5 à 130 parties en poids d'une charge siliceuse renforçante (B1) choisie parmi les silices de pyrogénation et les silices de précipitation.

9) Composition selon l'une des revendications 6 à 8, caractérisée en ce que la gomme (A) a pour formule générale R3-a(R'O)aSiO(R2SiO)nSi(OR')aR3-a dans laquelle les symboles R, identiques ou différents, représentent des radicaux hydrocarbonés en C1-C8, subsitués ou non par des atomes d'halogène, des radicaux cyano ; le symbole R' représente un atome d'hydrogène, un radical alkyle en C1-C4, le symbole a représente zéro ou un, le symbole n représente un nombre ayant une valeur suffisante pour obtenir une viscosité d'au moins 1 Million de mPa.s à 25°C, au moins 50 % en nombre de radicaux représentés par R sont des radicaux méthyle.

10) Composition selon la revendication 9, caractérisée en ce que de préférence 0,005 à 0,5 mole % des motifs entrant dans la constitution de la gomme (A) sont choisis parmi ceux de formules $(CH_2=CH)(R)SiO$ et $(CH_2=CH)R_{2-a}(RO')_aSi_{0,5}$.

11) Composition selon l'une des revendications 6 à 10, caractérisée en ce qu'elle comporte en outre de 0,1 à 6 parties d'un agent de texturation (D) qui est un polymère organofluoré sous forme d'un solide pulvérulent.

12) Composition selon l'une des revendications 6 à 11, caractérisée en ce qu'elle comporte en outre, en plus d'une charge renforçante $(B_1)$, de 0,1 à 6 parties $(B_2)$ d'un péroxyde organique.

13) Composition selon la revendication 12, caractérisée en ce que jusqu'à 90 % en poids de la charge silicone renforçante $(B_1)$ est remplacée par des charges semi-renforçantes ou de bourrage.

14) Composition selon l'une des revendications 6, 12 et 13, durcie en un élastomère par chauffage.

15) Composition selon l'une des revendications 1 à 5, caractérisée en ce que la matrice silicone est une composition de silicone vulcanisable à chaud comportant (A) une gomme diorganopolysiloxane, présentant par molécule au moins deux groupes vinyle liés au silicium et une viscosité à 25°C d'au moins 500 000 mPa.s, (B) au moins un organohydrogénopolysiloxane présentant par molécule au moins trois atomes d'hydrogène liés au silicum, (C) une charge renforçante, et (D) une quantité catalytiquement efficace d'un catalyseur qui est un composé d'un métal du groupe du platine.

16) Compostion de silicone selon la revendication 15, caractérisée en ce que le composé (C) est une charge renforçante siliceuse.

17) Composition selon l'une des revendications 15 et 16, caractérisée en ce qu'elle comporte :
– (A) : 100 parties en poids d'une gomme diorganopolysiloxane présentant par molécule au moins deux groupes vinyle liés au silicium et une viscosité à 25°C d'au moins 500 000 mPa.s,
– (B) : au moins un organohydrogénopolysiloxane présentant par molécule au moins trois atomes d'hydrogène liés au silicum en quantité telle que le rapport en nombre des fonctions hydrures de (B) sur les groupes vinyle de (A) soit compris entre 0,4 et 10,

– (C) : 5 à 130 parties en poids d'une charge renforçante de préférence siliceuse choisie parmi les silices de pyrogénation et les silices de précipitation,

– (D) : une quantité catalytiquement efficace d'un catalyseur qui est un composé d'un métal du groupe du platine.

**18)** Composition selon l'une des revendications 15 à 17, caractérisée en ce que la gomme (A) a pour formule générale $R_{3-a}(R'O)_a SiO(R_2SiO)_n Si(OR')_a R_{3-a}$ dans laquelle les symboles R, identiques ou différents, représentent des radicaux hydrocarbonés en $C_1$-$C_8$, subsitutés ou non par des atomes d'halogène, des radicaux cyano ; le symbole R' représente un atome d'hydrogène, un radical alkyle en $C_1$-$C_4$, le symbole a représente zéro ou un, le symbole n représente un nombre ayant une valeur suffisante pour obtenir une viscosité d'au moins 1 Million de mPa.s à 25°C, au moins 50 % en nombre de radicaux représentés par R sont des radicaux méthyle.

**19)** Composition selon la revendication 18, caractérisée en ce que de préférence 0,005 à 0,5 mole % des motifs entrant dans la constitution de la gomme (A) sont choisis parmi ceux de formules $(CH_2=CH)$ $(R)SiO$ et $(CH_2=CH)R_{2-a}(RO')_a Si_{0,5}$.

**20)** Composition selon l'une des revendications 15 à 19, caractérisée en ce qu'elle comporte de 0,1 à 6 parties d'un organohydrogénopolysiloxane (B) présentant un motif siloxane de formule générale moyenne :

$$\frac{(H)_c \ (R'')_d SiO_{4-d-c}}{2}$$

dans laquelle R" représente des radicaux méthyle, phényle et vinyle, 50 % au moins de ces radicaux étant des radicaux méthyle, c représente un nombre quelconque de 0,01 à 1 inclus et d représente un nombre quelconque de 0,01 à 2 inclus.

**21)** Composition selon l'une quelconque des revendications 15 à 20, caractérisée en ce que les organohydrogénopolysiloxanes sont choisis parmi les polymères linéaires, ramifiés ou cycliques, constitués de motifs choisis parmi ceux de formules :

$R''_2 SiO$, $H(R'')SiO$, $H(R'')_2 SiO_{0,5}$, $HSiO_{1,5}$, $R''SiO_{1,5}$ $SiO_2$, $R''SiO_{0,5}$, et sont ajoutés en quantité telle que le rapport en nombre des fonctions hydrure de (B) sur les groupes vinyle (A) soit compris entre 1,1 et 4.

**22)** Composition selon l'une quelconque des revendications 15 à 21, caractérisée en ce que jusqu'à 90 % en poids de la charge siliceuse renforçante (C) est remplacée par des charges semi-renforçantes ou de bourrage.

**23)** Composition selon l'une quelconque des revendications 15 à 22, caractérisée en ce qu'elle est durcie en un élastomère par chauffage.

**24)** Composition selon l'une des revendications 1 à 5, caractérisée en ce que la matrice est une composition de diorganopolysiloxanes durcissables en un élastomère de silicone par des réaction de polycondensation, caractérisée en ce qu'il comporte :

– (A) : au moins une huile diorganopolysiloxane portant à chaque extrémité de la chaîne au moins deux groupes condensables ou hydrolysables, ou un seul groupe hydroxy,

– (B) : un catalyseur de polycondensation de l'huile,

– (C) : un silane comportant au moins trois groupes condensables ou hydrolysables, quand (A) est une huile à extrémités hydroxy.

**25)** Composition selon la revendication 24, caractérisée en ce que le diorganopolysiloxanes (A) répond à la formule générale (1) :

$$Y_n Si_{3-n} O(SiR_2 O)_x SiR_{3-n} Y_n \qquad (1)$$

dans laquelle :

R représente des radicaux hydrocarbonés monovalents identiques ou différents, Y représente des groupes hydrolysables ou condensables identiques ou différents, ou des groupes hydroxy,

n est choisi parmi 1, 2 et 3 avec n = 1 quand Y est un hydroxy, et x est un nombre entier supérieur à 1, de préférence supérieur à 10.

**26)** Composition selon la revendication 25, caractérisée en ce que le radical R est choisi parmi les radicaux alkyle en $C_1$-$C_8$, vinyle, phényle et trifluoro-3,3,3 propyle, au moins 60 % en nombre des radicaux R étant des radicaux méthyle.

**27)** Composition selon l'une des revendications 25 et 26, caractérisée en ce que Y est choisi parmi les groupes amino, acylamino, aminoxy, cétiminoxy, iminoxy, enoxy, alcoxy, alcoxy-alkylenoxy, acyloxy et phosphate.

**28)** Composition selon l'une des revendications 24 à 27, caractérisée en ce qu'elle comporte un silane (D) dans le cas où les groupes condensables ou hydrolysables ne sont pas des groupes hydroxy et en ce que le silane (D) répond à la formule :

$$R_{4-a} \, Si \, Y'_a \qquad (2)$$

dans laquelle R est un radical hydrocarboné monovament, Y' représente des groupes hydrolysables ou condensables, identiques ou différents, et a est égal à 3 ou 4.

**29)** Composition selon l'une des revendications 24 à 28, caractérisée en ce qu'elle est monocomposante.

**30)** Composition selon l'une des revendications 24 à 28, caractérisée en ce qu'elle est bi-composante.

**31)** Composition selon la revendication 30, caractérisée en ce qu'elle comporte :

– (A) : 100 parties en poids d'une huile alpha-oméga-dihydroxydiorganopolysiloxane de viscosité de 50 à 300 000 mPa.s dont les radicaux organiques sont choisis parmi les radicaux méthyle, éthyle, vinyle, phényle et trifluoro-3,3,3 propyle, au moins 60 % en nombre étant des radicaux méthyle, jusqu'à 20 % en nombre étant des radicaux phényle, au plus 2 % étant des radicaux vinyle,

– (B) : 0,01 à 1 partie (calculée en poids d'étain métal) d'un composé catalytique de l'étain,

– (C) : 0,5 à 15 parties d'un polyalcoxysilane ou polyalcoxysiloxane,

– (D) : 0 à 100 parties, de préférence 5 à 50 parties de charge minérale siliceuse.

**32)** Composition selon l'une des revendications 1 à 5, caractérisée en ce que la matrice silicone est une composition de silicone polyaddition durcissable en un élastomère par des réactions d'hydrosilylation, caractérisée en ce qu'elle comporte :

– (A) : au moins un organopolysiloxane présentant par molécule au moins deux groupes vinyle liés au silicium,

– (B) : au moins un organopolysiloxane présentant par molécule au moins trois atomes d'hydrogène liés au silicum,

– (C) : une quantité catalytiquement efficace d'un catalyseur qui est un composé d'un métal du groupe du platine.

**33)** Composition selon la revendication 32, caractérisée en ce que le rapport molaire des atomes d'hydrogène liés au silicium dans (B) aux radicaux vinyle liés au silicium dans (A) soit compris entre 0,4 et 10.

**34)** Composition selon l'une des revendications 32 et 33 caractérisée en ce qu'elle comporte :

– A) au moins un organopolysiloxane présentant des motifs siloxyle de formule :

$$\frac{Y_a Z_b \, SiO_{(4-a-b)}}{2} \qquad (1)$$

dans laquelle Y est un groupe vinyle, Z est un groupe hydrocarboné monovalent n'ayant pas d'action défavorable sur l'activité du catalyseur, a est 1 ou 2, b est 0, 1, ou 2 et a + b est compris entre 1 et 3, éventuellement tous les autres motifs étant des motifs de formule moyenne :

$$\frac{Z_c \, SiO_{4-c}}{2} \qquad (2)$$

dans laquelle Z a la même signification que ci-dessus et c a une valeur comprise entre 0 et 3.

– B) au moins un organopolysiloxane comportant des motifs siloxyle de formule :

$$\frac{H_d W_e \, SiO_{4-d-e}}{2} \qquad (3)$$

dans laquelle W répond à la même définition que ci-dessus pour Z, d est 1 ou 2, e est 0, 1 ou 2, d + e a une valeur comprise entre 1 et 3, éventuellement tous les autres motifs étant des motifs de formule moyenne :

$$W_g SiO_{4-g} \qquad\qquad (4)$$

2

dans laquelle W a la même signification que ci-dessus et g a une valeur comprise entre 0 et 3.

– C) une quantité catalytiquement efficace d'un composé du platine.

35) Composition selon l'une des revendications 32 à 34, caractérisée en ce qu'elle comporte :

– (A) : 100 parties d'une huile diorganopolysiloxane bloquée à chaque extrémité de sa chaîne par un motif vinyldiorganosiloxyle dont les radicaux organiques liés aux atomes de silicium sont choisis parmi les radicaux méthyle, éthyle et phényle, au moins 60 % molaire de ces radicaux étant des radicaux méthyle de viscosité 100 à 500 000 mPa.s à 25°C,

– (B) : au moins un organohydrogénopolysiloxane choisi parmi les homopolymères et copolymères liquides linéaires ou en réseau présentant par molécule au moins 3 atomes d'hydrogène liés à des atomes de silicium différents et dont les radicaux organiques liés aux atomes de silicium sont choisis parmi les radicaux méthyle, éthyle et 60 % au moins de ces radicaux étant des radicaux méthyle, le produit (B) étant utilisé en quantité telle que le rapport molaire des fonctions hydrure sur les groupes vinyle sont compris entre 1,1 et 4,

– (C) : une quantité catalytiquement efficace d'un catalyseur au platine.

36) Composition selon la revendication 35, caractérisée en ce que 50 % en poids du polymère (A) est remplacé par un copolymère en réseau comportant les motifs triméthylsiloxyle, méthylvinylsiloxyle et $SiO_{4/2}$ dans lequel 2,5 et 10 % molaire des atomes de silicium comportent un groupe vinyle et dans lequel le rapport molaire des groupes triméthylsiloxyle au groupe $SiO_{4/2}$ est compris entre 0,5 et 1.

37) Composition selon l'une des revendications 32 à 36, caractérisée en ce qu'elle comporte en outre de 5 à 100 parties de charges siliceuses renforçantes ou semi-renforçantes pour 100 parties de la somme des organopolysiloxanes (A) + (B).

38) Composition selon l'une des revendications 32 à 37, précédentes durcie en un élastomère.

39) Composition selon l'une des revendications 1 à 38, caractérisée en ce que la matière active est fongicide.

40) Composition selon l'une des revendications 1 à 38, caractérisée en ce que la matière active est bactéricide.

41) Composition selon l'une des revendications 1 à 38, caractérisée en ce que la matière active est insecticide.

42) Composition selon l'une des revendications 1 à 38, caractérisée en ce que la matière active est herbicide.

43) Composition selon l'une des revendications 1 à 38, caractérisée en ce que la matière active est régulateur de la croissance des plantes.

44) Composition selon l'une des revendications 1 à 38, caractérisée en ce que la matière active est un engrais.

45) Composition selon la revendication 39, caractérisée en ce que la matière active est le tris O-éthyl phosphonate d'aluminium.

46) Composition selon l'une des revendications 1 à 45 caractérisée en ce que l'agent auxiliaire est un sel hydrosoluble.

47) Composition selon la revendication 46 caractérisée en ce que l'agent auxiliaire est un sel minéral.

48) Composition selon la revendication 47 caractérisée en ce que le sel minéral est un sel alcalin ou alcalino-terreux d'acide minéral fort.

49) Procédé de traitement des plantes avec une matière à action biologique agricole caractérisée selon l'une des revendications 1 à 48.

50) Procédé de traitement selon la revendication 49, caractérisée en ce que la composition est appliquée contre tout ou partie de la plante pendant un temps suffisant à l'apport d'une quantité efficace de matière active.

51) Procédé de traitement selon la revendication 49, caractérisée en ce que la composition est placée au voisinage de la plante pendant un temps suffisant à l'apport d'une quantité efficace de matière active.

52) Procédé de traitement selon la revendication 51, caractérisée en ce que la composition et la plante ou partie de la plante à traiter sont dans un milieu gazeux.

53) Procédé de traitement selon la revendication 51, caractérisée en ce que la composition et la plante ou partie de la plante à traiter sont dans une atmosphère gazeuse humide.

54) Procédé de traitement selon la revendication 51, caractérisée en ce que la composition et la plante sont dans un milieu solide divisé, de préférence le sol.

FIGURE 1 / 2

Elution dans l'eau

EP 0 449 748 A1

FIGURE 2 / 2

Elution en atmosphère humide

EP 0 449 748 A1

Office européen
des brevets

**RAPPORT DE RECHERCHE EUROPEENNE**

Numero de la demande

EP 91 42 0066

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 919 338 (WACKER) * Revendication 1; page 2, paragraphes 2,3; page 3, paragraphes 1,2,3; page 4, dernier paragraphe; page 9, exemple 1 * --- | 1 | A 01 N 25/10 C 08 K 5/00 C 08 L 83/04 |
| P,Y | EP-A-0 356 354 (RHONE-POULENC)(=DK8904144)(26-02-1990) * Revendications 1-48; page 14, exemples 5-8 * --- | 1 | |
| Y | EP-A-0 153 070 (PFIZER) * Revendications 1,2,6,8,10,11,18 * --- | 1 | |
| Y | FR-A-2 249 857 (MERCK) * Revendication 1; page 1, lignes 11-27; page 2, lignes 4-31 * --- | 1 | |
| A | US-A-4 166 111 (N.F. CARDELLI) * Revendications 1,2; colonne 4, lignes 54-68 * --- | 1 | |
| A | EP-A-0 284 521 (RHONE-POULENC) * Revendication 1 * ----- | 1 | DOMAINES TECHNIQUES RECHERCHES (Int. Cl.5) C 08 K A 01 N |

Le présent rapport a été établi pour toutes les revendications

| Lieu de la recherche | Date d'achèvement de la recherche | Examinateur |
|---|---|---|
| LA HAYE | 31-05-1991 | DEPIJPER R.D.C. |

EPO FORM 1503 03.82 (P0402)